(19) **Europäisches Patentamt**
**European Patent Office**
**Office européen des brevets**

(11) **EP 2 629 444 B1**

(12) **EUROPEAN PATENT SPECIFICATION**

(45) Date of publication and mention
of the grant of the patent:
**05.11.2014 Bulletin 2014/45**

(51) Int Cl.:
*H04L 1/00* *(2006.01)* *H04L 27/26* *(2006.01)*

(21) Application number: **13155814.0**

(22) Date of filing: **19.02.2013**

(54) **Method and apparatus for transceiving broadcast signals**

Verfahren und Vorrichtung zum Senden und Empfangen von Rundfunksignalen

Procédé et appareil d'émission-réception de signaux de diffusion

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.02.2012 US 201261601012 P**
**05.04.2012 US 201261620958 P**
**24.04.2012 US 201261637824 P**

(43) Date of publication of application:
**21.08.2013 Bulletin 2013/34**

(60) Divisional application:
**14186202.9**

(73) Proprietor: **LG Electronics, Inc.**
**Seoul, 150-721 (KR)**

(72) Inventors:
• **Ko, Woosuk**
**137-724 Seoul (KR)**
• **Moon, Sangchul**
**137-724 SEOUL (KR)**

(74) Representative: **Cabinet Plasseraud**
**52, rue de la Victoire**
**75440 Paris Cedex 09 (FR)**

(56) References cited:
**WO-A2-2009/093809** **US-A1- 2009 190 677**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 629 444 B1

**Description**

[Technical Field]

The present invention relates to a method for transceiving broadcast signals and an apparatus for transceiving broadcast signals, and more particularly, to a method for transceiving broadcast signals, which can enhance data transmission efficiency and is compatible with conventional methods for transceiving broadcast signals, and a transceiving apparatus thereof.

[Background Art]

As analog broadcasting will soon end, a variety of technologies for transmitting and receiving digital broadcast signals has been developed. Digital broadcast signals can transmit a greater capacity of video/audio data than analog broadcast signals, and can include a variety of optional data in addition to video/audio data.

A digital broadcast system can provide High Definition (HD) images, multi-channel sound, and a variety of optional services. However, data transmission efficiency for a high capacity of data transmission, robustness of transmitting and receiving networks, and flexibility of networks in consideration of mobile receiving equipment are problems that should still be improved. WO2009/093809 discloses a method of transmitting/receiving a signal in an RF band wherein the signal comprises frames of data comprising a preamble. US2009/190677 discloses digital video broadcast systems employing preamble symbols.

[Disclosure]

[Technical Problem]

A technical object of one embodiment of the present invention is to provide a method and apparatus for transceiving broadcast signals, which can enhance data transmission efficiency in a digital broadcast system.

Another technical object of the present invention is to provide a method and apparatus for transceiving broadcast signals, which can receive digital broadcast signals without error even under an indoor environment or using mobile receiving equipment.

A further technical object of the present invention is to provide a method and apparatus for transceiving broadcast signals, which can maintain compatibility with a conventional broadcast system in addition to achieving the above described objects.

[Technical Solution]

To achieve the object, methods for transmitting broadcast signals in claims 1 and 11 are disclosed.

In another aspect, devices for transmitting and receiving broadcast signals in claims 6 and 16 are disclosed.

[Advantageous Effects]

According to the present invention, in a digital broadcast system, it is possible to enhance data transmission efficiency and increase robustness in terms of transmission and reception of broadcast signals, by virtue of provision of a MIMO system.

Further, according to the present invention, it is possible to provide a method and apparatus for transceiving broadcast signals, which can receive digital broadcast signals without error even under an indoor environment or using mobile reception equipment.

Furthermore, according to the present invention, it is possible for a broadcast signal receiver to efficiently acquire the transmission characteristics of a signal that is transmitted in a frame and to determine whether decoding is performed using P1 and AP1 signaling through a P1 symbol or an API symbol.

In addition, according to the present invention, it is possible for a broadcast signal transmitter to appropriately process data according to the characteristics of a broadcast system to ensure the robustness of a transmission channel using a MIMO matrix.

[Description of Drawings]

FIG. 1 illustrates a broadcast signal transmitter according to an embodiment of the present invention.

FIG. 2 illustrates a BICM encoder according to an embodiment of the present invention.

FIG. 3 illustrates a broadcast signal receiver according to an embodiment of the present invention.

FIG. 4 illustrates a BICM decoder according to an embodiment of the present invention.

FIG. 5 illustrates an additional frame structure based on PLP according to an embodiment of the present invention.

FIG. 6 illustrates a structure of an FEF based additional frame according to an embodiment of the present invention.

FIG. 7 illustrates an embodiment of an OFDM generator of a broadcast signal transmission device for inserting AP1 symbols according to the present invention.

FIG. 8 illustrates another embodiment of an OFDM demodulator according to the present invention.

FIG. 9 illustrates a P1 symbol structure and a P1 symbol inserter according to an embodiment of the present invention.

FIG. 10 illustrates an AP1 structure and AP1 symbol generator according to an embodiment of the present invention.

FIG. 11 illustrates an AP1 detection and decoding module according to an embodiment of the present invention.

FIG. 12 illustrates an AP1 symbol detector according to an embodiment of the present invention.

FIG. 13 illustrates an S1 field of a P1 symbol according to an embodiment of the present invention.

FIG. 14 illustrates an S2 field of a P1 symbol according to an embodiment of the present invention.

FIG. 15 illustrates a signaling method according to an embodiment of the present invention.

FIG. 16 illustrates an S3 field of an AP1 symbol according to an embodiment of the preset invention.

FIG. 17 illustrates an S4 field 1 of an AP1 symbol according to an embodiment of the present invention.

FIG. 18 is a flowchart of a method of transmitting a broadcast signal according to an embodiment of the present invention.

FIG. 19 is a flowchart of a method of receiving a broadcast signal according to an embodiment of the present invention.

[Best Mode]

Hereinafter, although the preferred embodiments of the present invention will be described in detail with reference to the accompanying drawings and contents as described with relation to the accompanying drawings, it is to be understood that the present invention is not limited to the embodiments.

Various technologies have been introduced to increase transmission efficiency and to perform robust communication in a digital broadcast system. One of such technologies is a method of using a plurality of antennas at a transmitting side or a receiving side. This method may be classified into a Single-Input Single-Output (SISO) scheme in which transmission is performed through a single antenna and reception is performed through a single antenna, a Single-Input Multi-Output (SIMO) scheme in which transmission is performed through a single antenna and reception is performed through multiple antennas, a Multi-Input Single-Output (MISO) scheme in which transmission is performed through multiple antennas and reception is performed through a single antenna, and a Multi-Input Multi-Output (MIMO) scheme in which transmission is performed through multiple antennas and reception is performed through multiple antennas. Although the multiple antennas may be exemplified by 2 antennas for ease of explanation in the following description, the description of the present invention may be applied to systems that use 2 or more antennas.

The SISO scheme corresponds to a general broadcast system that uses 1 transmission antenna and 1 reception antenna. The SIMO scheme corresponds to a broadcast system that uses 1 transmission antenna and a plurality of reception antennas.

The MIMO scheme corresponds to a broadcast system that uses a plurality of transmission antennas and 1 reception antenna to provide transmit diversity. An example of the MISO scheme is an Alamouti scheme. In the MISO scheme, it is possible to receive data through 1 antenna without performance loss. Although a reception system can receive the same data through a plurality of reception antennas in order to improve performance, this case will be described as belonging to MISO cases in this specification.

The MIMO scheme corresponds to a broadcast system that uses a plurality of transmission antennas and a plurality of reception antennas to provide transmission/reception diversity and high transmission efficiency. In the MIMO scheme, signals are processed (or handled) differently in time and space dimensions and a plurality of data streams is transmitted through parallel paths that simultaneously operate in the same frequency band to achieve diversity effects and high transmission efficiency.

The performance of a system that employs the MIMO technology depends on characteristics of a transmission channel. The efficiency of such a system is high, especially, when the system has independent channel environments. That is, the performance of the system that employs the MIMO technology may improve when channels of all antennas ranging from antennas of the transmitting side and antennas of the receiving side are independent channels that have no correlation to each other. However, in a channel environment in which the correlations between channels of transmission and reception antennas are very high as in a line-of-sight (LOS) environment, the performance of the system that employs the MIMO technology may be significantly reduced or the system may not be able to operate.

In addition, if the MIMO scheme is applied to a broadcast system that uses the SISO and MISO schemes, it is possible to increase data transmission efficiency. However, in addition to the above problems, there is a need to maintain compatibility to allow a receiver having a single antenna to receive services. Accordingly, the present invention suggests a method for solving such existing problems.

In addition, the present invention can provide a broadcast signal transmitter/receiver and a broadcast transmission and reception method for a conventional terrestrial broadcast system and a system that can transmit and receive additional broadcast signals (or enhanced broadcast signals), for example, mobile broadcast signals, while sharing an RF frequency band with a terrestrial broadcast system such as DVB-T2.

Hereinafter, a new broadcast system according to an embodiment of the present invention may be referred to as a next generation broadcasting system to handheld (NGH) system. The new system or NGH system according to an embodiment of the present invention is for digital terrestrial and hybrid (combination of terrestrial with satellite transmissions) broadcasting to handheld terminals. This transmission system is intended for carrying Transport Streams or generic data streams feeding linear and non-linear applications like television, radio and data services.

In addition, the new broadcast system according to an embodiment of the present invention consists of four profile each covering a different structure of the transmitter network:

Base profile (profile I): Covers sheer terrestrial transmission with single and multi-aerial structures that require only a single aerial and tuner on the receiver side. In this case, a transmitted signal may be SISO or MISO processed.

MIMO profile (profile II): Covers sheer terrestrial transmission with multi-aerial structures on both ends. Terminals suitable for this profile need to employ two tuners as well. MIMO transmission options are included in the optional MIMO profile in order to exploit the diversity and capacity advantages made possible by the use of multiple transmission elements at the transmitter and receiver.

Hybrid profile (profile III): Covers a combination of terrestrial and satellite transmissions that requires only a single tuner on receiver side.

Hybrid MIMO profile (profile IV): Covers a combination of terrestrial and satellite transmission requiring a double aerial and tuner set-up on receiver side. Once again, a part of the configurations can be handled by profile II receivers, other configurations require a special hybrid MIMO receiver. The hybrid MIMO profile is a profile facilitating the use of MIMO on the terrestrial and/or satellite elements within a hybrid transmission scenario.

A broadcast signal transmitter and receiver of the present invention can perform MISO processing and MIMO processing on a plurality of signals that are transmitted and received through a plurality of antennas. The following is a description of a broadcast signal transmitter and receiver that performs signal processing on 2 signals that are transmitted and received through 2 antennas.

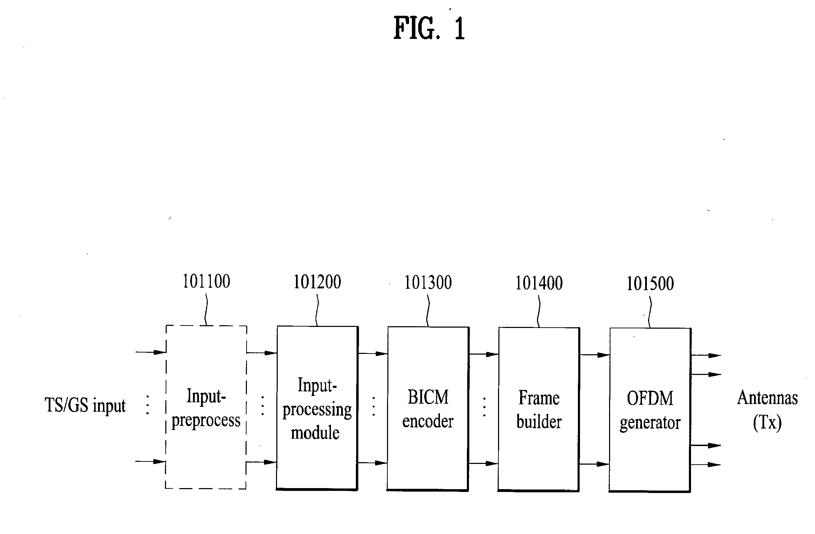

FIG. 1 illustrates a broadcast signal transmitter according to an embodiment of the present invention.

As shown in FIG. 1, the broadcast signal transmitter according to the present invention may include an input processor 101100, an input processing module 101200, a Bit Interleaved Coded Modulation (BICM) encoder 101300, a frame builder 101400, and an Orthogonal Frequency-Division Multiplexing (OFDM) generator (or transmitter) 101500. The broadcast signal transmitter according to the present invention may receive a plurality of MPEG-TS streams or a General Stream Encapsulation (GSE) stream (or GS stream).

The input processor 101100 may generate a plurality of PLPs (physical layer pipes) on a service basis in order to give robustness to a plurality of input streams, i.e., a plurality of MPEG-TS streams or GSE streams.

PLPs are data units that are identified in the physical layer. Specifically, a PLP is data having the same physical layer attribute which is processed in the transmission path and may be mapped on a cell by cell basis in a frame. In addition, a PLP may be considered a physical layer Time Division Multiplexing (TDM) channel that carries one or a plurality of services. Specifically, a path through which such a service is transmitted is transmitted or a stream identifiable in the physical layer which is transmitted through the path is referred to as a PLP.

Thereafter, the input processing module 101200 may generate a Base Band (BB) frame including a plurality of generated PLPs. The BICM module 101300 may add redundancy to the BB frame to correct an error in a transmission channel and may interleave PLP data included in the BB frame.

The BICM encoder 101300 may perform encoding for error correction. The BICM encoder 101300 of the present invention may independently apply the MISO scheme or the MIMO scheme to each PLP data item and may also independently apply the MISO scheme or the MIMO scheme to L1-signaling information. The L1-signaling information according to the present invention may include L1-post signaling information and L1-post signaling information. A procedure in which the BICM encoder 101300 independently performs MISO and MIMO processing on PLP data will be described later.

Thereafter, each data item is input to the frame builder 101400. In this case, the frame builder 101400 may receive output data of the BICM encoder 101300 through a first path and a second path. Data input through the first path may be transmitted through a first antenna Tx_1 and data input through the second path may be transmitted through a first antenna Tx_2.

Accordingly, the frame builder 101400 of the present invention may include a first frame building block for processing data input through the first path and a second frame building block for processing data input through the second path. The first frame building block may include a first delay compensator, a first pair-wise cell mapper, and a first pair-wise frequency interleaver for processing data input through the first path and the second frame building block may include a second delay compensator, a second pair-wise cell mapper, and a second pair-wise frequency interleaver for processing data input through the second path.

The first pair-wise cell mapper and the first pair-wise frequency interleaver and the second pair-wise cell mapper and the second pair-wise frequency interleaver may operate in the same manner for the first path and the second path and may also operate independently.

The following is a description of a data processing method for blocks included in the first frame building block and the second frame building block.

The first delay compensator and the second delay compensator may compensate L1-pre signaling data or L1-post signaling data input through each path for both delay corresponding to 1 frame and delay caused by BICM encoding. The L1-signaling information may include not only information regarding a current frame but also information regarding a subsequent frame. The reason for this is that, in the input processing procedure, the L1-signaling information is delayed compared to currently input PLP data by one frame. This procedure allows one frame to transmit all L1-signaling information including information regarding the current frame and the subsequent frame.

The first pair-wise cell mapper and the second pair-wise cell mapper may map L1-signaling data and PLP data in symbols input through the paths to a subcarrier in an OFDM symbol in a frame on a cell by cell basis.

In this case, the PLP data input through each path may include common PLP data and MISO/MIMO-encoded PLP data and the sub-slice processor module may perform sub-slicing on PLP data cells to map the same to a frame in order to achieve diversity effects.

In addition, the first pair-wise cell mapper and the second pair-wise cell mapper may pair 2 consecutive input cells and map the same to a frame.

In order to increase MISO signal reconstruction performance of the receiver, there is a need to secure coherence between MISO transmission channels when MISO encoding is performed. Accordingly, in order to secure coherence between channels, the first pair-wise cell mapper and the second pair-wise cell mapper may pair cells generated from the same PLP data and map the same to an OFDM modulation subcarrier to maximize coherence between channels. Specifically, in the embodiment of the present invention, since the MISO encoder is located at the BICM encoder prior to the frame builder, the frame builder configures a frame structure on a pair basis taking into consideration such MISO encoding.

The first pair-wise frequency interleaver and the second pair-wise frequency interleaver may perform frequency interleaving on data input through each path on a cell basis and may then output frequency-interleaved data to the OFDM generator through each path.

In this case, the first pair-wise frequency interleaver and the second pair-wise interleaver pair 2 consecutive input cells and process the same as one interleaving unit to perform frequency interleaving. The purpose of this is to maximize coherence between channels.

The OFDM generator 101500 may OFDM-modulate input data mapped within a frame on a symbol basis and output the modulated data to an antenna. In an embodiment of the present invention, broadcast signals are transmitted through 2 transmission antennas in a MISO or MIMO manner. Thus, the OFDM generator 101500 may receive and modulate broadcast signals through the first path and the second path and output the modulated broadcast signals to two antennas Tx1 and Tx2.

In the present invention, a block that modulates a broadcast signal to be transmitted through the first antenna Tx1 may be referred to as a first OFDM generating block and a block that modulates a broadcast signal to be transmitted through the second antenna Tx2 may be referred to as a second OFDM generating block.

When the channel correlation between channels transmitted through the first antenna and the second antenna is high, the first and second antennas may transmit a signal by applying polarity to the signal according to whether the correlation is negative or positive. In the present invention, a MIMO scheme using this method may be referred to as a polarity multiplexing MIMO scheme, the first antenna that adds polarity to a received signal to transmit the signal may be referred to as a vertical antenna, and the second antenna that adds polarity to a received signal to transmit the signal may be referred to as a horizontal antenna. Accordingly, the first OFDM generating block of the present invention may OFDM-modulate a broadcast signal input through the first path and transmit the modulated broadcast signal through the first antenna Tx1 and the second OFDM generating block of the present invention may OFDM-modulate a broadcast signal input through the second path and transmit the modulated broadcast signal through the second antenna Tx2.

Each of the first OFDM generating block and the second OFDM generating block includes the following modules.

The first OFDM generating block may include a pilot insertion module, an IFFT module, a PAPR module, a GI insertion module, a P1 symbol insertion module, an AP1 symbol insertion module, and a DAC.

The second OFDM generating block may include a pilot insertion module, an IFFT module, a PAPR module, a GI insertion module, a P1 symbol insertion module, an AP1 symbol insertion module, and a DAC. The modules of the second OFDM generating block perform the same functions as those of the first OFDM generating block.

Thus, operations of the modules included in the first OFDM generating block are described below in detail. The pilot insertion module inserts a pilot having a predetermined pilot pattern into a frame at a corresponding position and outputs the frame to the IFFT module.

The IFFT module may perform an IFFT operation on the pilot-inserted signal of each path and output the resulting signal to the PAPR module.

The PAPR module reduces PAPR of time-domain signals and outputs the resulting signals to the GI insertion module. Here, the PAPR module may feed required information back to the pilot insertion module according to a PAPR reduction algorithm.

The GI insertion module copies a last portion of an effective OFDM symbol and inserts a guard interval into each OFDM symbol in a cyclic prefix (CP) format and outputs the resulting symbol to the P1 symbol insertion module. The GI information may be transmitted through P1 signaling information or L1-pre signaling information.

In an embodiment of the present invention, a P1 symbol and an AP1 symbol may be inserted into every frame at the P1 insertion module in the OFDM generator 101500. That is, the P1 insertion module may insert 2 or more preamble symbols into every frame. When 2 or more preamble symbols are used as in the present invention, there are advantages in that robustness to burst fading that may occur in a mobile fading environment is further increased and signal detection performance is also improved.

The P1 symbol insertion module may insert a P1 symbol into each frame at a start portion thereof and output the resulting frame to the AP1 symbol insertion module.

The AP1 symbol insertion module may insert an AP1 symbol (additional preamble symbol) into the P1 symbol at a rear portion thereof and output the resulting frame to the DAC.

The DAC may convert each signal frame, into which the AP1 symbol is inserted, into an analog signal and transmit the analog signal through the first transmission antenna Tx1.

The OFDM generator 101500, the P1 symbol, and the AP1 symbol will be described later in detail.

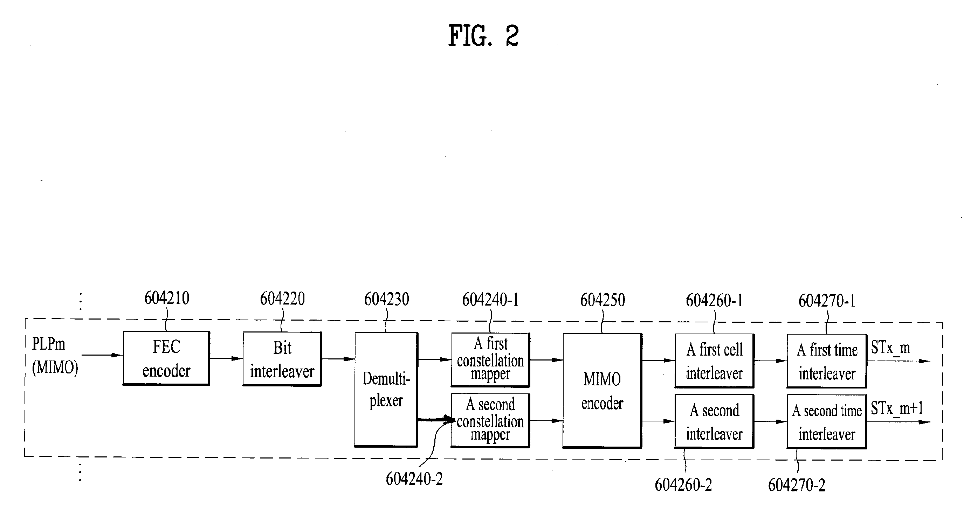

FIG. 2 illustrates a BICM encoder according to an embodiment of the present invention.

The BICM encoder 101300 of the present invention may include a first BICM encoding block for MISO PLP processing, a second BICM encoding block for MIMO PLP processing, and a third BICM encoding block for performing MISO or MIMO encoding on L1-pre signaling information and L1-post signaling information.

The first BICM encoding block may include a Forward Error Correction (FEC) encoder, a bit interleaver, a demultiplexer, a constellation mapper, a cell interleaver, a time interleaver, and a MISO encoder. The MISO encoder may be located next to the time interleaver and the location of the MISO encoder may be changed according to designer intention. The MISO encoder may perform MISO encoding on the time-interleaved PLP data using a MISO encoding matrix and output MISO-encoded PLP data through 2 paths. In this manner, it is possible to achieve diversity. Embodiments of the MISO encoding method according to the present invention include Orthogonal Space-Time Block Code (OSTBC)/Orthogonal Space Frequency Block Code (OSFBC)/Alamouti code methods.

The second BICM encoding block may include a Forward Error Correction (FEC) encoder, a bit interleaver, a demultiplexer, first and second constellation mappers, a MIMO encoder, first and second cell interleavers, and first and second time interleavers. The numbers of the constellation mappers, the cell interleavers, and the time interleavers may be changed according to designer intention.

The third BICM encoding block may output encoded signals of the L1-pre signaling information and the L1-post signaling information through two paths, respectively.

The second BICM encoding block for MIMO processing is described below with reference to FIG. 2. The encoding block shown in FIG. 2 is included in the BICM encoder 101300 of FIG. 1 and performs MIMO encoding after constellation mapping in an embodiment of the present invention.

The broadcast signal receiver may include a BICM decoder corresponding to the BICM encoder 101300 of the present invention. The BICM decoder may include a MIMO decoder, a time deinterleaver, and a cell deinterleaver and the MIMO decoder, the time deinterleaver, and the cell deinterleaver may perform processing on received data on a per symbol basis. If the MIMO encoder included in the BICM encoder is located next to the time interleaver, the receiver needs to first perform MIMO decoding on each data item and therefore each data item may be output on a bit basis and time deinterleaving and cell deinterleaving processes may then be performed. In this case, although data is input in units of bits to the time interleaver, information regarding the units of symbols of the input data is additionally needed to perform time interleaving. Accordingly, memory load of the broadcast signal receiver may be increased since the broadcast signal receiver should store information regarding symbol mapping of input bits required for the deinterleaving procedure. Accordingly, in an embodiment of the present invention, the BICM encoding block performs MIMO encoding after constellation mapping. However, this may be changed according to designer intention.

An FEC encoder 604210 may perform LDPC encoding and BCH encoding for adding redundancy so as to allow the receiver to correct an error in a transmission channel for input-processed PLP data. A bit interleaver 604220 may perform bit interleaving on the FEC-encoded PLP data to allow the data to have robustness to a burst error that may occur during transmission. A demultiplexer 604230 may demultiplex the bit-interleaved PLP data. In addition, the demultiplexer 604230 may demultiplex PLP data and output the demultiplexed data through 2 paths required for MIMO transmission. In this case, the transmission characteristics of the data transmitted through each path may differ. Accordingly, the demultiplexer 604230 may randomly allocate bit-interleaved PLP data to each input path.

The first and second constellation mappers 605240-1 and 605240-2 may map the demultiplexed PLP data bits to a constellation on a per symbol basis. In this case, the constellation mapper may rotate the constellation at a predetermined angle according to modulation type. Rotated constellations may be represented by an In (I-phase) component and a Quadrature-phase (Q-phase) component. The constellation mapper may delay only the Q-phase component by an arbitrary value. The constellation mapper may remap the demultiplexed PLP data to a new constellation using the In-phase component and the delayed Q-phase component.

In addition, the first and second constellation mappers 605240-1 and 605240-2 may function as the demultiplexer 604230. Thus, the first and second constellation mappers 605240-1 and 605240-2 receive the bit-interleaved PLP data and map the bits of the bit-interleaved PLP data to complex symbols. The mapped symbols may have the same QAM mode or different QAM modes.

A MIMO encoder 604250 may perform MIMO encoding on the input PLP data of the 2 paths using a MIMO matrix and output the MIMO-encoded PLP data through the 2 paths. The MIMO matrix of the present invention may include spatial multiplexing, Golden Code (GC), full-rate full diversity code, and linear dispersion code. Details of the MIMO matrix required for the MIMO encoding procedure will be described later.

First and second cell interleavers 604260-1 and 604260-2 may perform interleaving on PLP data output through the 2 paths on a cell basis, respectively, and may perform cell interleaving only on PLP data corresponding to one half the size of a cell included in one FEC block from among PLP data input through each path. Accordingly, cell interleaving by the two cell interleavers may have the same effects as interleaving by one cell interleaver. In addition, there is an advantage in that cell interleaving can be performed using memory setting of one cell interleaving without allocating an additional memory to two cell interleavers in order to process data of a plurality of paths.

First and second time interleavers 604270-1 and 604270-2 may perform interleaving on the cell-interleaved PLP data output through the paths on a time basis. Here, the time interleavers may perform interleaving using FEC blocks. In this case, the time interleavers may perform time interleaving on PLP data input through the paths using the same method and may also perform time interleaving on the PLP data using different methods.

The frame builder 101400 may receive data encoded by the BICM encoder 101300 and map the same to a frame. As described above, the first BICM encoding block may output miso-encoded PLP data through two paths and the second BICM encoding block may output MIMO-encoded PLP data through two paths. In addition, the third BICM encoding block may output encoded signals of the L1-pre signaling information and the L1-post signaling information through two paths, respectively.

Thereafter, each data item is input to the frame builder 101400. In this case, the frame builder 101400 may receive output data of the BICM encoder 101300 through a first path and a second path. Data input through the first path may be transmitted through a first antenna Tx_1 and data input through the second path may be transmitted through a second antenna Tx_2.

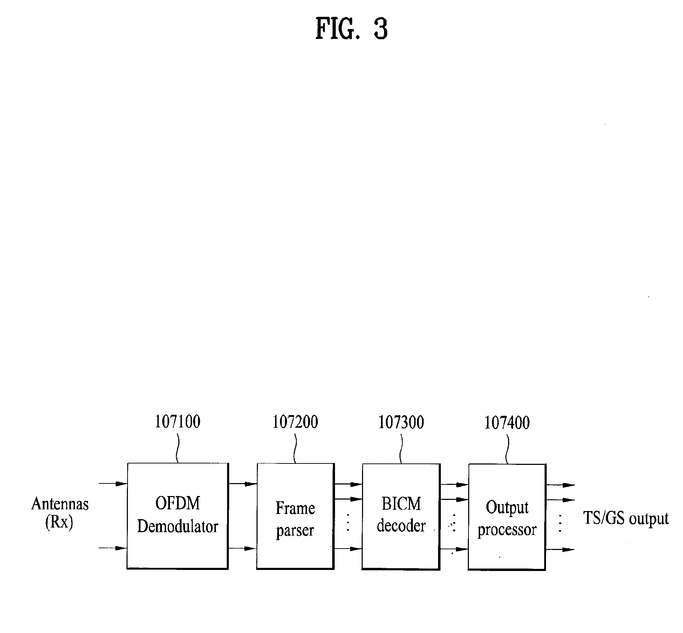

FIG. 3 illustrates a broadcast signal receiver according to an embodiment of the present invention.

As shown in FIG. 3, the broadcast signal receiver may perform a reverse procedure to that of the broadcast signal transmitter described above with reference to FIG. 1. The broadcast signal receiver according to an embodiment of the present invention may include an OFDM demodulator 107100, a frame parser (or frame demapper) 107200, a BICM decoder 107300, and an output processor 107400.

The OFDM demodulator (or OFDM receiver) 107100 may convert signals received through a plurality of reception antennas into frequency-domain signals. In an embodiment of the present invention, two reception antennas Rx1 and Rx2 may be used to receive MIMO or MISO-transmitted signals. In addition, polarity multiplexing MIMO may be used in an embodiment of the present invention. Accordingly, the OFDM demodulator 107100 may OFDM-demodulate a broadcast signal input through the first antenna Rx1 and output the demodulated signal to the frame demapper through the first path and a second OFDM demodulating block may OFDM-demodulate a broadcast signal input through the second antenna Rx2 and output the demodulated signal to a frame demapper 107200.

The frame demapper 107200 may process data input through the first path and the second path and output PLPs for a required service. The frame demapper 107200 of the present invention may perform a reverse procedure to that of the frame builder 101400 described above with reference to FIG. 1. Accordingly, the frame demapper 107200 of the present invention may pair and extract 2 consecutive cells and output the same to a BICM decoder 107300.

The BICM decoder 107300 may correct an error caused by a transmission channel and may perform a reverse procedure to that of the BICM encoder 101300 described above with reference to FIG. 1. Accordingly, the BICM decoder 107300 of the present invention may independently apply a MISO scheme to each input data item and may also apply a MIMO scheme.

As a result, the BICM decoder 107300 may output BICM-decoded MISO PLP data, BICM-decoded MIMO PLP data, and BICM-decoded L1-pre and L1-post signaling data to an output processor 107400.

The output processor 107400 may perform processes required to generate an output TS or a GS stream. Here, the broadcast signal receiver may receive a dual polarity signal as an input antenna signal and output one or a plurality of TSs or GS streams.

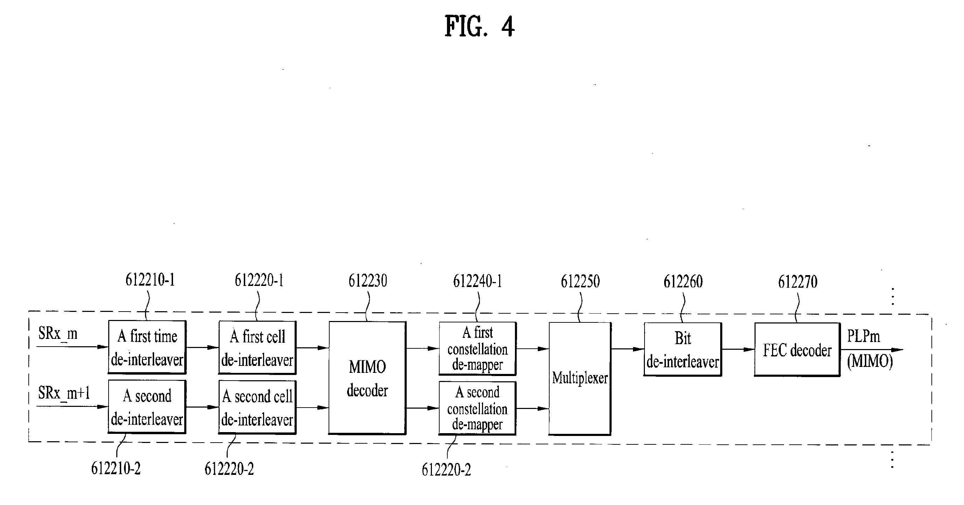

FIG. 4 illustrates a BICM decoder according to an embodiment of the present invention.

Specifically, FIG. 4 illustrates a BICM decoding block included in the BICM decoder and the BICM decoding block may perform MIMO processing on input data. The BICM decoding block of FIG. 4 may perform a reverse procedure to that of the BICM decoding block of FIG. 2.

The BICM decoding block shown in FIG. 4 may include first and second time deinterleavers 612210-1 and 612210-2, first and second cell deinterleavers 612220-1 and 612220-2, a MIMO decoder 612230, first and second constellation demappers 612240-1 and 612240-2, a multiplexer 612250, a bit deinterleaver 612260, and an FEC decoder 612270.

The first and second time deinterleavers 612210-1 and 612210-2 may perform time-domain deinterleaving on input data on a cell basis to reconstruct (or restore) original data in the original order. In this case, the first and second cell deinterleavers 612220-1 and 612220-2 may perform cell deinterleaving only on data corresponding to one half the size of a cell included in one FEC block from among data input through each path. As a result, cell deinterleaving by the first and second deinterleavers 612220-1 and 612220-2 can have the same effects as cell deinterleaving by a deinterleaver using one FEC block.

The MIMO decoder 612230 may perform MIMO decoding on cell-interleaved data input through two paths SRx_m and SRx_m+1. The MIMO decoder 612230 may perform operations, other than the fourth operation (i.e., a signal combination operation), from among the 4 operations of the MISO decoder 612110 described above in the same manner as the MISO decoder 612110. Here, the MIMO decoder 612210 may also perform decoding using the MIMO matrix described above.

Each of the first and second constellation demappers 612240-1 and 612240-2 may calculate an LLP value. Specifically, in the case in which the first and second constellation mappers 604240-1 and 604240-2 described above with reference to FIG. 2 have performed constellation rotation and Q-phase component delay, each of the first and second constellation demappers 612240-1 and 612240-2 may calculate an LLR value after delaying the I-phase component. The multiplexer 612250 may reconstruct the demapped data into a bitstream format.

The first and second constellation demappers 612240-1 and 612240-2 may function as the multiplexer 612250. Thus, the first and second constellation demappers 612240-1 and 612240-2 may demap input data to output one bitstream to the bit deinterleaver 612260.

The bit deinterleaver 612260 may perform deinterleaving on the input bitstream and the FEC decoder 612270 may perform FEC decoding on the deinterleaved data to correct an error in the transmission channel and may then output MIMO PLP data.

In an embodiment, the broadcast signal transmission and reception devices of the present invention may use a polarity multiplexing MIMO scheme as described above. In addition, MIMO processing of the present invention may be applied to 6, 8, 10 bits/cell unit (bpcu) and also to intentional power imbalance of 0, 3, and 6 dB between two transmission antennas.

MIMO processing is intended for a 2x2 MIMO system which means that at least two antenna aerials are equipped at both transmitter and receiver side. MIMO processing acts on a pair of input constellation points (not necessarily drawn from the same constellation) and creates a pair of outputs intended for the two elements of a dual-polar transmitter.

In the following, an embodiment of the present invention in which the MIMO encoder 604250 uses a MIMO matrix including a precoding matrix and a phase hopping matrix will be described.

The precoding process is carried out on pairs of normalized QAM symbols from the output of the constellation mapper. Also, the precoding process is repeated for each pair of QAM symbols in turn.

The precoding matrices may be defined and used as matrices including only the rotation matrix and may also be defined and used as matrices including the power imbalance matrix and the rotation matrix. This may be changed according to designer intention. The rotation matrix of Expression 3 can express both input signals S1 and S2 provided through antenna 1 and antenna 2 even in a fully correlated channel, thereby increasing diversity. In addition, when the Euclidian distances of the input signals S1 and S2 are different, the power imbalance matrix may make the Euclidian distances equal. Accordingly, in the case in which the precoding matrix is applied, it is possible to reduce performance degradation when signals output from the transmission antennas have different powers and signals output through the transmission antennas have been modulated according to different modulation schemes. The available power imbalances are 0 dB, 3 dB and 6 dB. In the following description of the present invention, a parameter $\alpha$ of a power imbalance matrix for adjusting power imbalances of the input signals S1 and S2 may be referred to as an unequal power factor $\alpha$.

Moreover, phase hopping may be applied to the output of such precoding and may include applying an incremental phase change to cells transmitted through transmission antennas. When phase hopping is performed, it is possible to minimize the influence of channel changes according to characteristics of the transmitter such that the transmitter can acquire additional diversity. In the present invention, according to designer intention, a phase rotation can be applied to a path corresponding to only a specific one of the multiple antennas, which can be changed according to designer intention. Also, the phase-hopping matrix is independent of the modulation and power imbalance.

The following Expression 1 shows a MIMO matrix obtained by performing phase rotation on a precoding matrix.

[Expression 1]

$$\begin{bmatrix} 1 & 0 \\ 0 & e^{j\phi(k)} \end{bmatrix} \begin{bmatrix} \cos\theta & \sin\theta \\ \sin\theta & -\cos\theta \end{bmatrix} \begin{bmatrix} \sqrt{\alpha} & 0 \\ 0 & \sqrt{1-\alpha} \end{bmatrix} \begin{bmatrix} s_1 \\ s_2 \end{bmatrix}, \phi(k) = \frac{2\pi}{N}k, k = 0,..,N-1$$

The positive/negative (+/-) signs of the cosine and sine components of the rotation matrix included in the rotation matrix included in Expression 1 can be changed according to designer intention. The index "k" of phase hopping may correspond to the index of an OFDM carrier or an index of an LDPC block mapped to a QAM symbol.

When the MIMO matrix is used, a power ratio "r" of transmission antennas having different polarities may be determined as shown in Expression 2. In one embodiment of the present invention, the power ratio "r" is referred to as a power imbalance linear factor.

[Expression 2]

$$P_{tx1} = \alpha\cos^2\theta + (1-\alpha)\sin^2\theta$$

$$P_{tx2} = \alpha\sin^2\theta + (1-\alpha)\cos^2\theta$$

$$r = \frac{P_{tx2}}{P_{tx1}}$$

The power imbalance linear factor "r" may be used to determine the angle θ of the rotation matrix of Expression 1. The angle θ may be determined according to Expression 3.

[Expression 3]

$$\theta = \arctan\left( \frac{\sqrt{\alpha(r+1)-1}}{\sqrt{\alpha(r+1)-r}} \right)$$

Accordingly, the broadcast signal transmission system designer can design a MIMO broadcast transmission and reception system which can optimize the unequal power factor "α" for the power imbalance linear factor "r" of transmission antennas using Expression 3. In addition, the receiver, which receives signals to which the above expressions have been applied, can separate signals S1 and S2 from the MIMO-encoded signals according to technology, such as ML and sphere decoding, using the optimized unequal power factor "α", the power imbalance linear factor "r", and Expression 1.

As described above, if the power imbalance linear factor "r" and the unequal power factors "α" of the input signals S1 and S2 are specified, then the angle θ of the rotation matrix is determined through Expression 3. The following Table 1 summarizes values of the angle θ described through Expression 3.

[Table 1]

| | | 0dB | | 3dB | | 6dB | |
|---|---|---|---|---|---|---|---|
| | | α | θ | α | θ | α | θ |
| 6bits/cell | S1: QPSK S2:16QAM | 0.44 | 45° | 1/3 | 0 | 1/5 | 0 |
| 8bits/cell | S1:16QAM S2:16QAM | 0.50 | $\left\| \mathrm{atan}\left( \frac{\sqrt{2}+4}{\sqrt{2}+2} \right) \right\|$ | 1/3 | 0 | 1/5 | 0 |

Although the angle θ can be determined based on the power imbalance linear factor "r" and the unequal power factors "α" of the input signals S1 and S2 according to Expression 3, it may be possible that the angle θ cannot be optimized when the power imbalance is 3dB or 6dB as shown in Table 1.

Accordingly, in an embodiment of the present invention, a MIMO output power control matrix for controlling power of a MIMO-encoded signal output from each transmission antenna is used in order to optimize the angle θ when the power imbalance is 3dB or 6dB. The MIMO output power control matrix may be defined as being included in the precoding matrix (or matrices) described above. The MIMO output power control matrix includes an output symbol power control factor "β" and is used to optimize the angle θ. In this case, the unequal power factor "α" of the input signals S1 and S2 may correspond to the parameter "β" and thus may be referred to as an input symbol power control factor.

The precoding matrix including the MIMO output power control matrix and the MIMO matrix including the phase hopping matrix are represented by Expression 4.

[Expression 4]

$$\sqrt{2}\begin{bmatrix}1 & 0 \\ 0 & e^{j\phi(k)}\end{bmatrix}\begin{bmatrix}\sqrt{\beta} & 0 \\ 0 & \sqrt{1-\beta}\end{bmatrix}\begin{bmatrix}\cos\theta & \sin\theta \\ \sin\theta & -\cos\theta\end{bmatrix}\begin{bmatrix}\sqrt{\alpha} & 0 \\ 0 & \sqrt{1-\alpha}\end{bmatrix}\begin{bmatrix}s_1 \\ s_2\end{bmatrix}, \phi(k)=\frac{2\pi}{N}k, k=0,..,N-1,(N=9)$$

In this case, the output symbol power control factor "β" for the angle θ, the input symbol power control factor "α", and the power imbalance linear factor "r" between given transmission antennas may be determined through Expression 5.

[Expression 5]

$$p_1 = \alpha\cos^2\theta + (1-\alpha)\sin^2\theta$$

$$p_2 = \alpha\sin^2\theta + (1-\alpha)\cos^2\theta$$

$$\beta = \frac{p_2}{(p_1 r + p_2)}$$

The following Table 2 summarizes values of such parameters determined through Expressions 4 and 5 when the power imbalance is 0dB, 3dB, and 6dB.

[Table 2]

| | | 0dB | | | 3dB | | | 6dB | | |
|---|---|---|---|---|---|---|---|---|---|---|
| | | β | θ | α | β | θ | α | β | θ | α |
| 6bits/cell | S1: QPSK S2:16QAM | 0.50 | 45° | 0.44 | 1/3 | 0 | 0.50 | 0.20 | 0° | 0.50 |
| 8bits/cell | S1:16QAM S2:16QAM | 0.50 | $\mathrm{atan}\left\lvert\left(\frac{\sqrt{2}+4}{\sqrt{2}+2}\right)\right\rvert$ | 0.50 | 1/3 | 25° | 0.50 | 0.20 | 0° | 0.50 |
| 10bits/cell | S1:16QAM S2:64QAM | 0.50 | 22° | 0.50 | 1/3 | 15° | 0.50 | 0.20 | 0° | 0.50 |

FIG. 36 is a flowchart of a broadcast signal

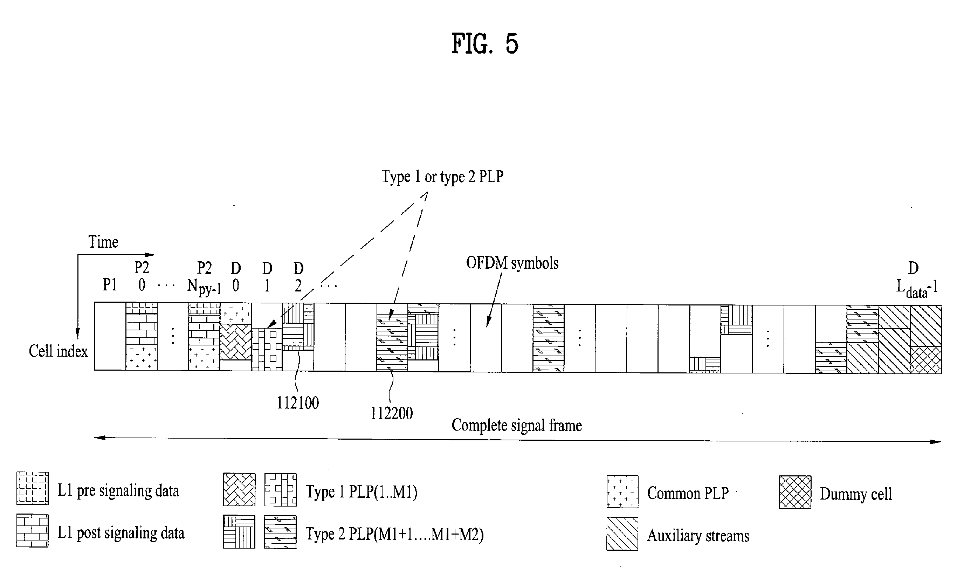

FIG. 5 illustrates an additional frame structure based on PLP according to an embodiment of the present invention.

As shown in FIG. 5, a frame according to an embodiment of the present invention may include a preamble area and a data area. The preamble area may include a P1 symbol and a P2 symbol and the data area may include a plurality of data symbols. The P1 symbol may transmit P1 signaling information and the P2 symbol may transmit L1-signaling information.

In this case, a preamble symbol may be additionally allocated to the preamble. This additional preamble symbol is referred to as an Additional Preamble 1 (AP1). In an embodiment of the present invention, one or more AP1 symbols may be added to a frame in order to improve detection performance of a mobile broadcast signal under very low SNR or time-selective fading conditions. AP1 signaling information transmitted through the AP1 symbol may include an additional transmission parameter.

The preamble area of the frame according to the present invention may include a P1 symbol, one or more AP1 symbols, one or more P2 symbols. The data area includes a plurality of data symbols (or data OFDM symbols). In an embodiment, the P2 symbol may be selective and whether or not the P2 symbol is inserted may be signaled through AP1 signaling information that is transmitted through an AP1 symbol.

In an embodiment of the present invention, a P1 insertion module in the OFDM generator 101500 of the broadcast signal transmitter may insert the P1 symbol and the AP1 symbol into every symbol. That is, the P1 insertion module may insert 2 or more preamble symbols into every frame. In another embodiment, an AP1 insertion module may be added downstream of (or next to) the P1 insertion module and the AP1 insertion module may insert the AP1 symbol. If 2 or more preamble symbols are used as in the present invention, there are advantages in that robustness to burst fading that may occur in a mobile fading environment is further increased and signal detection performance is also improved.

The P1 symbol may transmit P1 signaling information associated with a basic transmission parameter and transmission type and a corresponding preamble identifier and the receiver may detect the frame using the P1 symbol. A plurality of P2 symbols may be provided and may carry L1 signaling information and signaling information such as a command PLP. The L1 signaling information may include L1-pre signaling information and L1-post signaling information and the L1-pre signaling information may include information required to receive and decode the L1-post signaling information. The L1-post signaling information may include parameters required for the receiver to decode PLP data. As shown in FIG. 5, the L1-post signaling information may be located next to L1-pre signaling information.

The L1-post signaling information may include a configurable block, a dynamic block, an extension block, a Cyclic Redundancy Check (CRC) block, and an L1 padding block.

The configurable block may include information items that may be equally applied to one frame and the dynamic block may include specific information items corresponding to a currently transmitted frame.

The extension block may be a block that can be used when the L1-post signaling information is extended and the CRC block may include information items used for error correction of the L1-post signaling information and may have a size of 32 bits. When the L1-post signaling information is separately transmitted through a number of encoding blocks, the padding block may be used to match the size of information included in each encoding block and the size thereof may be variable.

The common PLP may include network information such as a Network Information Table (NIT), PLP information, and service information such as a Service Description Table (SDT) or an Event Information Table (EIT). The preamble of the present invention may include only the P1 symbol, the L1-pre signaling information, and the L1-post signaling information or may include all of the P1 symbol, the L1-pre signaling information, the L1-post signaling information, and the common PLP according to designer intention. A plurality of data symbols located next to the P1 symbol may include a plurality of PLPs. The plurality of PLPs may include audio, video, and data TS streams and PSI/SI information such as a Program Association Table (PAT) and a Program Map Table (PMT). In the present invention, a PLP that transmits PSI/SI information may be referred to as a base PLP or a signaling PLP. The PLPs may include a type-1 PLP that is transmitted through one sub-slice per frame and a type-2 PLP that is transmitted through two sub-slices per frame. The plurality of PLPs may transmit one service and may also transmit service components included in one service. When the PLPs transmit service components, the transmitting side may transmit signaling information which indicates that the PLPs transmit service components.

In addition, additional data (or an enhanced broadcast signal) in addition to basic data may be transmitted through a specific PLP while sharing an RF frequency band with the conventional terrestrial broadcast system according to an embodiment of the present invention. In this case, the transmitting side may define a system or a signal that is currently transmitted through signaling information of the P1 symbol described above. The following description is given with reference to the case in which the additional data is video data. That is, as shown in FIG. 5, PLP M1 112100 and PLP (M1+M2) 112200 which are type 2 PLPs may be transmitted while including additional video data. In addition, in the present invention, a frame that transmits such additional video data may be referred to as an additional frame and a frame that transmits basic data may be referred to as a basic frame (or T2 frame).

In addition, a frame that can transmit not only additional data but also data associated with a new broadcast system different from the conventional terrestrial broadcast system may be referred to as an additional frame. In this case, a frame that transmits a conventional terrestrial broadcast may be referred to as a terrestrial broadcast frame and an additional frame may transmit additional data or basic data associated with the new broadcast system.

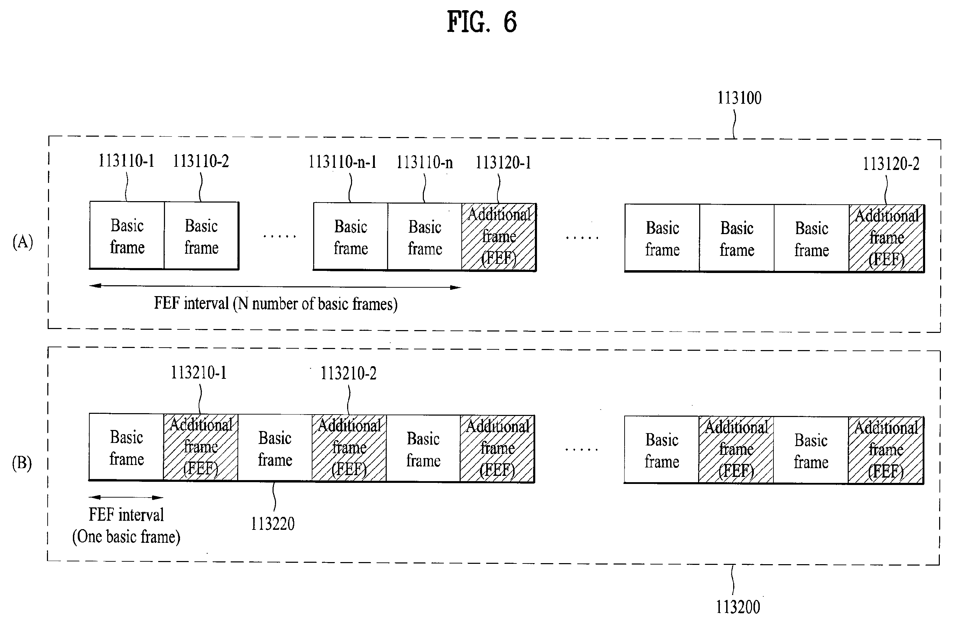

FIG. 6 illustrates a structure of an FEF based additional frame according to an embodiment of the present invention.

Specifically, FIG. 6 shows the case in which a Future Extension Frame (FEF) is used in order to transmit additional video data. In the present invention, a frame that transmits basic video data may be referred to as a basic frame and an FEF that transmits additional video data may be referred to as an additional frame.

FIG. 6 shows structures of superframes 11100 and 113200 in each of which a basic frame and an additional frame are multiplexed. Frames 113100-1 to 113100-n that are not shaded from among frames included in the superframe 113100 are basic frames and shaded frames 113120-1 and 113120-2 are additional frames.

FIG. 6(A) shows the case in which the ratio of basic frames to additional frames is N:1. In this case, the time required for the receiver to receive a next additional frame 113120-2 after receiving one additional frame 113120-1 may correspond to N basic frames.

FIG. 6(B) shows the case in which the ratio of basic frames to additional frames is 1:1. In this case, the proportion of additional frames in the superframe 113200 may be maximized and therefore the additional frames may have a structure very similar to that of the basic frames in order to maximize the extent of sharing with the basic frames. In addition, in this case, the time required for the receiver to receive a next additional frame 113210-2 after receiving one additional frame 113210-1 corresponds to 1 basic frame 113220 and therefore the superframe period is shorter than that of FIG. 6(A).

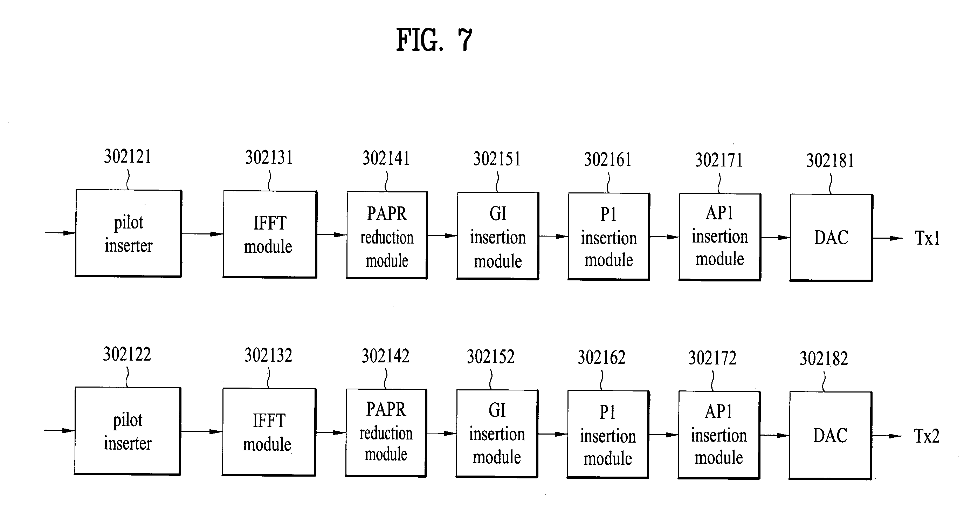

FIGS. 7(A) and 7(B) illustrate a P1 symbol generation procedure for identifying additional frames according to an embodiment of the present invention.

In the case in which additional video data is transmitted through additional frames which are distinguished from basic frames as shown in FIG. 6, there is a need to transmit additional signaling information for enabling the receiver to identify and process an additional frame. An additional frame of the present invention may include a P1 symbol for transmitting such additional signaling information and the P1 symbol may be referred to as an A(additional) P1 symbol. This AP1 symbol may be different from a P1 symbol that is used in a conventional frame and a plurality of AP1 symbols may be provided. In an embodiment, the AP1 symbol may be located before a first P2 symbol in a preamble area of the frame.

In the present invention, a P1 symbol of a conventional frame may be modified and used to generate the minimum Hamming distance. The present invention suggests a method in which a minimum Hamming distance is generated by modifying the structure of the P1 symbol of the conventional frame or is generated by changing the symbol generator 114100 that generates symbols.

FIG. 7(A) shows the structure of the P1 symbol of the conventional frame. In the present invention, the structure of the P1 symbol of the conventional frame shown in FIG. 7(A) may be modified to generate a minimum Hamming distance. In this case, the minimum Hamming distance may be generated by changing a frequency displacement f_SH for the prefix and postfix of the conventional P1 symbol or changing the length (specifically, the size of T_P1 C or T_P1 B) of the P1 symbol. However, in the case in which the minimum Hamming distance is generated by modifying the structure of the P1 symbol, there is a need to appropriately modify parameters (the sizes of T_P1 C and T_P1 B and f_SH) used in the P1 symbol structure.

FIG. 7(B) shows the P1 symbol generator that generates P1 symbols. In the present invention, the P1 symbol generator shown in FIG. 7(B) may be modified to generate a minimum Hamming distance. In this case, a minimum Hamming distance may be generated using a method which changes the distribution of active carriers used for a P1 symbol in a CDS table module 114110, an MSS module 114120, and a C-A-B structure module 114130 included in the P1 symbol generator (for example, a method in which the CDS table module 114110 uses a different Complementary Set of Sequence (CSS)) or a method which changes a pattern for information that is transmitted through a P1 symbol (for example, a method in which the MSS module 114120 uses a different Complementary Set of Sequence (CSS)).

In addition, the AP1 symbol of the present invention described above with reference to FIG. 6 may be generated through the procedure described above with reference to FIG. 7.

The AP1 symbol will be described later in detail.

FIG. 7 illustrates an embodiment of an OFDM generator of a broadcast signal transmission device for inserting AP1 symbols according to the present invention. Specifically, FIG. 7 illustrates an embodiment of the OFDM generator when a broadcast signal is transmitted according to a MISO or MIMO scheme, especially, through 2 transmit antennas.

To accomplish this, the OFDM generator includes 2 pilot inserters 302121 and 302122, 2 IFFT modules 302131 and 302132, 2 PAPR reduction modules 302141 and 302142, 2 GI insertion modules 302151 and 302152, 2 P1 symbol insertion modules 302161 and 302162, 2 AP1 symbol insertion modules 302171 and 302172, and/or 2 DACs 302181 and 302182. In the present invention, a block that modulates a broadcast signal to be transmitted through the first transmit antenna Tx1 is referred to as a first transmitter and a block that modulates a broadcast signal to be transmitted through the second transmit antenna Tx2 is referred to as a second transmitter. The first transmitter includes a pilot inserter 302121, an IFFT module 302131, a PAPR reduction module 302141, a GI insertion module 302151, a P1 symbol insertion module 302161, an AP1 symbol insertion module 302172, and a DAC 302182.

The pilot inserters 302121 and 302122 insert pilots of determined pilot patterns into frames at corresponding positions and output the resulting frames to the IFFT modules 302131 and 302132. Here, the pilot pattern information may be signaled through AP signaling information or through L1 signaling information. The pilot pattern information may also be signaled through both AP signaling information and L1 signaling information.

The IFFT modules 302131 and 302132 transform the pilot-inserted signals into time-domain signals through inverse Fourier transform and output the time-domain signals to the PAPR reduction modules 302141 and 302142.

The PAPR reduction modules 302141 and 302142 reduce the PAPRs of the time-domain signals and output the resulting signals to the GI insertion modules 302151 and 302152. The PAPR reduction modules 302141 and 302142 may feed required information back to the pilot inserters 302121 and 302122 according to a PAPR reduction algorithm.

The GI insertion modules 302151 and 302152 copy last portions of effective OFDM symbols to front portions of the OFDM symbols to insert guard intervals in the form of a cyclic prefix into the OFDM symbols and output the resulting symbols to the P1 symbol insertion modules 302161 and 302162. The GI information is signaled through L1 signaling information. Part of the GI information is signaled through P1 signaling information.

The P1 symbol insertion modules 302161 and 302162 insert P1 symbols into the frames at start portions thereof and output the resulting frames to the AP1 symbol insertion modules 302171 and 302172.

The AP1 symbol insertion modules 302171 and 302172 insert AP1 symbols into the frames next to the P1 symbols and then output the resulting frames to the DACs 302181 and 302182. Here, the P1 symbols and AP symbols may be inserted by the P1 symbol insertion modules 302161 and 302162. In this case, the AP1 symbol insertion modules 302171 and 302172 are omitted.

The DACs 302181 and 302182 convert the frames in which the AP1 symbols are inserted into analog signals and transmit the analog signals through the transmit antennas Tx 1 and Tx2.

When the frames are transmitted after pilots are inserted by the pilot inserters 302121 and 302122, the receivers use the pilots for frame synchronization, frequency synchronization, time synchronization, transmission mode identification, and the like.

Pilots according to the present invention may be classified into 2 types. One is a scattered pilot and the other is a continual pilot. The scattered pilot is used when a receiver performs radio channel effects estimation and compensation and the continual pilot is used when a receiver performs accurate frequency synchronization or phase error removal.

In the present invention, there is a plurality of scattered pilot patterns. In an embodiment of the present invention, a frame is transmitted after one of the scattered pilot patterns is inserted into OFDM symbols of the frame according to FFT and Guide Interval (GI) sizes. More specifically, in an embodiment of the present invention, when a MIMO scheme is used, a frame is transmitted after one of 9 scattered pilot patterns PP1 to PP9 is inserted into OFDM symbols of the frame according to FFT and Guide Interval (GI) sizes.

In an embodiment of the present invention, an FFT size of 1 k, 2k, 4k, 8k, or 16k is used and a GI size of 1/128, 1/32, 1/16, 19/256, 1/8, 19/128, or 1/4 is used. The FFT size indicates the number of subcarriers that constitute one OFDM symbol and the GI size indicates a proportion of the GI in one OFDM symbol. Therefore, the length of an OFDM symbol varies depending on the FFT size and the GI size.

The GI size information is signaled through a GUARD_INTERVAL field of L1 pre-signaling information. Pilot pattern information of a pilot inserted in a current frame is signaled through L1 pre-signaling information and/or AP1 signaling information.

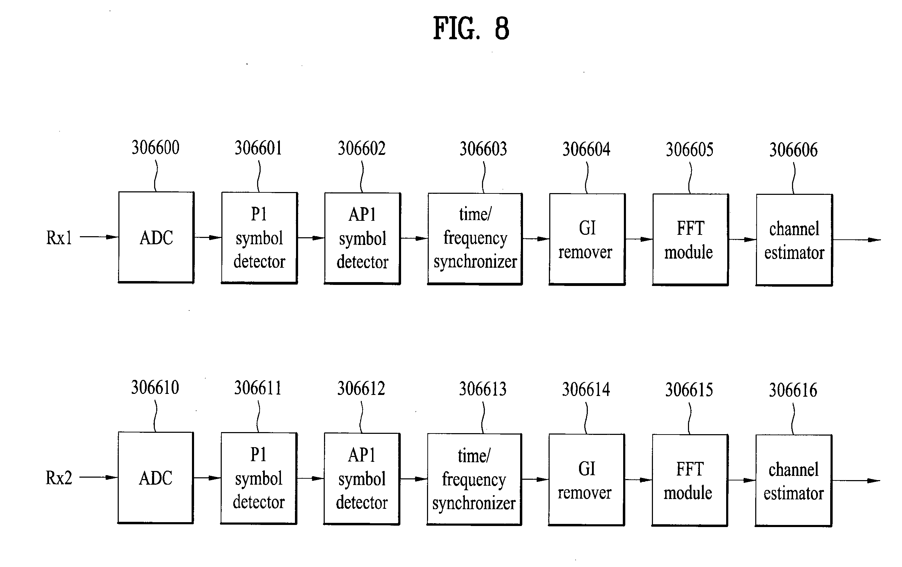

FIG. 8 illustrates another embodiment of an OFDM demodulator according to the present invention. In an embodiment of the present invention, two receive antennas Rx1 and Rx2 are used to receive a signal that is transmitted in a MIMO or MISO manner. The OFDM demodulator of FIG. 8 receives broadcast signals through respective paths of the two antennas Rx 1 and Rx2 and performs OFDM demodulation on the received broadcast signals.

The OFDM demodulator of FIG. 8 includes a first receiver and a second receiver. The first receiver includes an ADC 306600, a P1 symbol detector 306601, an AP1 symbol detector 306602, a time/frequency synchronizer 306603, a GI remover 306604, an FFT module 306605, and a channel estimator 306606. The second receiver includes an ADC 306610, a P1 symbol detector 306611, an AP1 symbol detector 306612, a time/frequency synchronizer 306613, a GI remover 306614, an FFT module 306615, and a channel estimator 306616. The first receiver may further include an equalization/MISO decoder and the second receiver may further include an equalization/MISO decoder.

Since the first receiver and the second receiver according to the present invention have the same configuration, only the first receiver is described below.

The ADC 306600 converts an analog broadcast signal received through the antenna Rx 1 into a digital signal and outputs the digital signal to the P1 symbol detector 306601. The P1 symbol detector 306601 detects and decodes a P1 symbol, which carries P1 signaling information, in the digital broadcast signal to identify a frame configuration of the currently received signal. The AP1 symbol detector 306602 detects and decodes an AP1 symbol, which carries AP1 signaling information, in the digital broadcast signal to acquire pilot pattern information or the like of the current frame. Here, P1 and AP1 symbols may be detected and decoded by the P1 symbol detector 306601. In this case, the AP1 symbol detector 306602 is omitted.

The time/frequency synchronizer 306603 performs time synchronization and frequency synchronization including guard interval detection using the P1 signaling information and the AP1 signaling information. After time synchronization and frequency synchronization are achieved, the guard interval remover 306604 removes a guard interval from the signal and the FFT module 306605 transforms the resulting signal into a frequency-domain signal. From pilot signals included in the frequency-domain signal, the channel estimation module 306606 estimates a transport channel from the transmit antenna to the receive antenna.

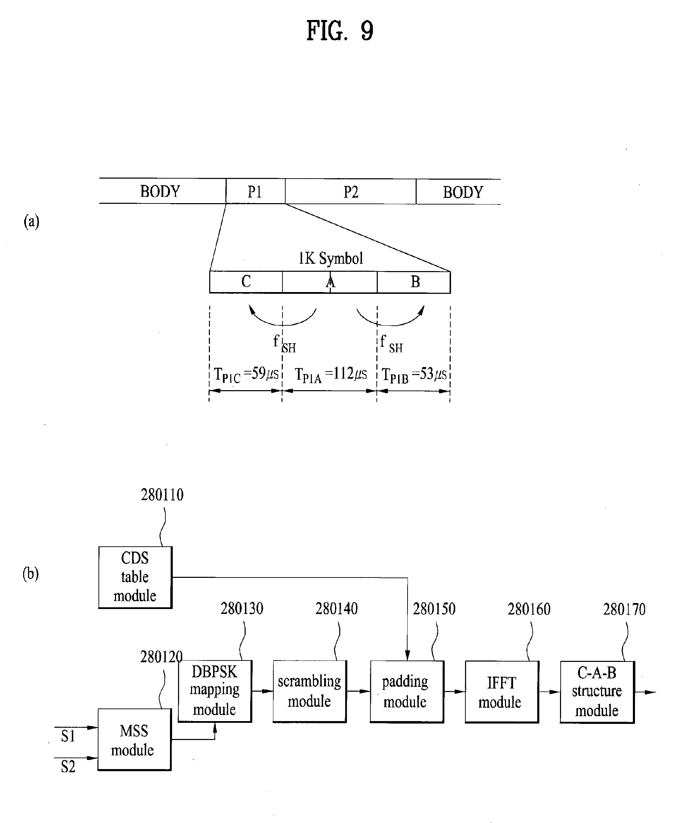

FIG. 9 illustrates a P symbol structure and a P1 symbol inserter according to an embodiment of the present invention.

Specifically, FIG. 9(a) illustrates a P1 symbol structure according to the present invention. In FIG. 9(a), a portion including a P1 symbol and a P2 symbol is referred to as a preamble region and a body portion is referred to as a data region. The data region includes a plurality of data symbols (or data OFDM symbols).

As shown in FIG. 9(a), the P1 symbol is generated by copying a front portion and a rear portion of an effective symbol A and frequency-shifting the copied portions by +fSH and then locating the shifted portions at a front portion C and a rear portion B of the effective symbol A. In the present invention, the portion C is referred to as a prefix and the portion B is referred to as a postfix. That is, the P1 symbol consists of the prefix, the effective symbol, and the postfix. In the present invention, this P1 symbol structure is also referred to as a C-A-B structure. Here, in an embodiment, the P1 symbol is a 1 K OFDM symbol.

FIG. 9(b) is a block diagram of a P1 symbol generator or a P1 symbol insertion module that are used in a P1 symbol generation procedure according to the present invention. As shown in FIG. 9(b), the P1 symbol generator or the P1 symbol insertion module includes a Carrier Distribution Sequence (CDS) table module 280110, a Modulation Signaling Sequence (MSS) module 280120, a Differential Binary Phase Shift Keying (DBPSK) mapping module 280130, a scrambling module 280140, an IFFT module 280160, and a C-A-B structure module 280170. Through operations of the blocks of the P1 symbol generator of FIG. 9(b), finally, the C-A-B structure module 280170 outputs a P1 symbol as shown in FIG. 9(a).

In an embodiment of the present invention, the P1 symbol structure of FIG. 9(a) or the P1 symbol generator of FIG. 9(b) is modified to generate a new_system_P1 symbol. Alternatively, both the P1 symbol structure of FIG. 9(a) and the P1 symbol generator of FIG. 9(b) may be modified to generate a new_system_P1 symbol. P1 symbol,

When the P1 symbol structure of FIG. 9(a) is modified to generate a new_system_P1 symbol, at least one of the following methods may be used to generate a new_system_P1 symbol. In an example, the frequency shift (or displacement) value fSH for the prefix and the postfix may be modified to generate a new_system_P1 symbol. In another example, the length of the P1 symbol (for example, the length of TP1C or TP1B) may be modified to generate a new-system_P1 symbol. In another example, the 1 K length of the P1 symbol may be replaced with 512, 256, or 128 to generate a new-system_P1 symbol. In this case, parameters (for example, fSH, TP1 C, or TP1 B) used for the P1 symbol structure need to be appropriately corrected. In an embodiment, in a 8MHz system, a P1 symbol having a C-A-B structure has a duration of $224\mu s$. Here, the duration of the A part may be $112\mu s$. The duration of the C part may be $59\mu s$, which corresponds to 542 samples. The B part may be $53\mu s$, which corresponds to 482 samples. Accordingly, the difference between the lengths of the C part and the B part of the P1 symbol corresponds to 60 samples. That is, an offset of the C part and the B part corresponds to 30 samples.

When the P1 symbol generator of FIG. 9(b) may be modified to generate a new-system_P1 symbol, at least one of the following methods may be used to generate a new-system_P1 symbol. In an example, a new-system_P1 symbol may be generated using a method in which a distribution of active carriers used in a P1 symbol in the CDS table module 280110, the MSS module 280120, and the C-A-B structure module 280170 is changed (for example, using a method in which the CDS table module 280110 uses a different Complementary Set of Sequences (CSS)). In another example, a new-system_P1 symbol may be generated using a method in which a pattern of information transmitted through the P1 symbol is modified (for example, using a method in which the MSS module 280120 uses a different CSS).

On the other hand, according to the present invention, a preamble symbol may be additionally allocated to a preamble region in a frame. In the present invention, the additional preamble symbol is referred to as an AP1 symbol for ease of explanation. According to the present invention, one or more AP1 symbols are added to a frame in order to improve mobile broadcast (NGH) signal detection performance under very low SNR or time-selective conditions.

Here, in an embodiment, the AP1 symbol is located at a P1 symbol and a first P2 symbol in a preamble region of a frame. That is, the P1 symbol and the AP1 symbol are continuously transmitted. In an embodiment, if a P2 symbol is not transmitted through a frame, the AP1 symbol is located between a P1 symbol and a first data symbol in a preamble region of the frame. In another embodiment, a P1 symbol and an AP1 symbol may be transmitted in one frame at non-continuous positions to which the P1 symbol and the AP1 symbol are allocated.

A preamble region in a frame according to the present invention includes a P1 symbol, one or more AP1 symbols, and one or more P2 symbols. A data region includes a plurality of data symbols (or data OFDM symbols).

In one embodiment, the AP1 symbol is generated by modifying the P1 symbol structure of FIG. 9(a) or by modifying the P1 symbol generator of FIG. 9(b) as described above in the embodiment of new-system_P1 symbol generation. In another embodiment, the AP1 symbol may also be generated by modifying both the P1 symbol structure of FIG. 9(a) and the P1 symbol generator of FIG. 9(b).

In an embodiment of the present invention, a P1 symbol and an AP1 symbol are inserted into every frame by the P1 insertion module in the OFDM generator of the transmitter. That is, the P1 insertion module inserts 2 or more preamble symbols into each frame. In another embodiment, an AP1 insertion module may be added next to the P1 insertion module and may insert an AP1 symbol. When 2 or more preamble symbols are used as in the present invention, there are advantages in that robustness to burst fading which may occur in a mobile fading environment is increased and signal detection performance is improved.

In an NGH system, an AP1 symbol may be transmitted next to a P1 symbol. The AP1 symbol may serve to supplement the limited capacity of the P1 symbol. That is, when signaling information included in data allocated to the P1 symbol is not sufficient, additional signaling information may be included in the AP1 symbol to be transmitted.

However, when the P1 symbol and the AP1 symbol are transmitted together, discrimination between the P1 symbol and the AP1 symbol and interference therebetween may be problematic.

If an AP1 symbol, which is transmitted while being concatenated with a P1 symbol, has delay of the same length as the P1 symbol such that a 0dB echo signal having a phase difference of 180 degrees is present in the AP1 symbol. When a signaling field value transmitted by the P1 symbol and a signaling field value transmitted by the AP1 symbol are equal, the two signals are canceled out such that the P1/AP1 correlation value becomes zero. In this case, a serious situation causing data loss may occur. Thus, there is a need to find a way to prevent such a situation.

If different Pseudo Random Bit Sequences (PRBSs) are used to scramble the signaling fields of the AP1 symbol and the P1 symbol, the correlation value does not become zero such that the two signals are output in any channel environment. That is, the P1 and AP1 signals are not equalized regardless of the signaling fields of the AP1 and P1 symbols. There is a need to take into consideration another problem that may occur when PRBSs used to scramble the signaling fields of the AP1 and P1 symbols are set to be different from each other. That is, there is a need to find a PRBS optimized for AP symbol transmission although the PRBS is different from that used for the P1 symbol.

In the OFDM system, an OFDM symbol in the time domain includes a number of subcarriers that have been independently modulated and, when the OFDM symbols are added with the same phase, total maximum power is increased by a multiple of the number of subcarriers. As a result, to transmit a signal having a high PAPR, the HPA of the transmitting side needs a wide linear region around the operating point and therefore there is a problem in that the price is increased. Accordingly, the PRBSs of the P1 and AP1 symbols are determined to have a low PAPR value.

That is, according to the present invention, an NGH system may use the same PRBS generator as used in a conventional T2 system in order to maintain compatibility with the Ts system and therefore there is a need to perform a procedure for searching for an optimal initialization sequence of the PRBS generator in this case.

In an embodiment, the receiver may perform descrambling using a PRBS of a P1 symbol in a procedure for decoding the P1 symbol and may perform descrambling using a PRBS of an AP1 symbol in a procedure for decoding the AP1 symbol.

The power spectrum density of a central frequency and frequencies around the central frequency when an initialization sequence of a PRBS selected taking into consideration PAPR characteristics in the time domain is used as described above. It can be seen that the power spectrum density of the P1 symbol and the power spectrum density of the AP1 symbol in the central frequency have similar values.

In this case, according to an embodiment, the value of the initialization sequence of the PRBS selected taking into consideration the PAPR characteristics in the time domain may be {110111001111001}. Here, the experimentally measured result is that the PAPR of the AP1 symbol is 6.2906 and the PAPR of the P1 symbol is 6.2901.

However, when the initialization sequence of the PRBS selected taking into consideration only the PAPR characteristics in the time domain is used, the power level of the AP1 symbol is higher than the power level of the P1 symbol at frequencies around the central frequency. That is, the power level of the Out Of Band of the AP1 symbol is measured at a higher level than the power level of the OOB of the P1 symbol. In this case, there may be another serious problem. That is, the OOB power level may cause serious interference to signals that are transmitted at adjacent frequencies. If the transmitting side attenuates the frequency components to a lower level than the spectrum mask level to prevent this problem, the characteristics/performance of the signals must be degraded.

Accordingly, there is a need to select an initialization sequence value of the PRBS taking into consideration not only the PAPR value but also the power level of the OOB.

In the present invention, in order to use the same scrambling sequence generator as used for the P1 symbol, an optimal scrambling sequence having best PAPR and OOB characteristics is selected by checking all possible initialization sequences other than that used for the P1 symbol.

An initialization sequence value that satisfies the above condition according to an embodiment of the present invention may be {111001100110001}.

If a scrambling sequence is generated using the suggested initialization sequence, the PAPR value of the AP1 symbol is reduced below that of the P1 symbol and the OOB power level of the AP1 symbol is also reduced below that of the P1 symbol.

Thus, the scrambling sequence for the AP1 symbol suggested in the present invention exhibits better characteristics and performance than that of the conventionalP1 symbol in terms of the PAPR and the OOB power level.

Even when an AP1 symbol is transmitted, the AP1 symbol may be processed such that it has a prefix and a postfix, similar to the P1 symbol. This will be described later in detail.

Since the P1 symbol and the AP1 symbol are continuously transmitted, interference may occur between the P1 symbol and the AP1 symbol and such interference may exert a significant influence upon a legacy receiver of the T2 system. A broadcast signal in the NGH system should be designed while maintaining compatibility with the T2 system. Although the legacy receiver of the T2 system needs to identify and parse P1 symbols since the legacy receiver of the T2 system does not use AP1 symbols, interference between P1 and AP1 symbols may be a hindrance to such P1 symbol identification and parsing. In addition, since the AP1 symbol serves as an extended version of the P1 symbol, a process for transmitting the AP1 symbol and a process for transmitting the P1 symbol should be performed in as similar a manner as possible. Accordingly, there is a need to perform a process for transmitting an AP1 symbol and a process for transmitting a P1 symbol so as not to cause interference between the AP1 and P1 symbols while maximizing the similarity between the process for transmitting the AP1 symbol and the process for transmitting the P1 symbol.

When the same offset as the offset of a prefix and a postfix of a P1 symbol is used as the offset of a prefix and a postfix of an AP1 symbol, an interference occurs between the AP1 and P1 symbols. In this case, it can be assumed that both a P1 detector and an AP1 detector have a false correlation value.

Therefore, if a length offset of the prefix and postfix of the AP1 symbol is 27, then that almost no interference occurs between the P1 and AP1 symbols. In addition, the transmission structure of the AP1 symbol is almost the same as the transmission structure of the P1 symbol. Hereafter, an AP1 symbol generator and configuration of an AP1 having the same configuration as and different parameters from the P1 symbol will be described later.

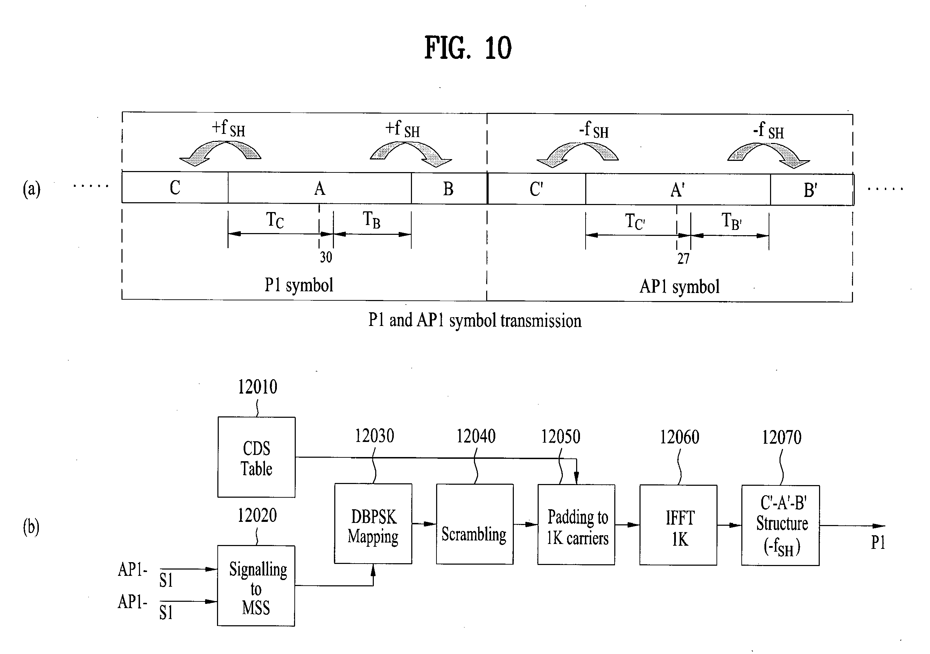

FIG. 10 illustrates an AP1 structure and AP1 symbol generator according to an embodiment of the present invention.

As shown in FIG. 10(A), a P1 symbol on the left side is generated by copying a front portion and a rear portion of an effective symbol A and frequency-shifting the copied portions by +fSH and then locating the shifted portions at a front portion C and a rear portion B of the effective symbol A. In the present invention, the portion C is referred to as a prefix and the portion B is referred to as a postfix. That is, the P1 symbol consists of the prefix, the effective symbol, and the postfix.

As shown in FIG. 10(A), an AP1 symbol on the left side is generated by copying a front portion and a rear portion of an effective symbol A' and frequency-shifting the copied portions by -fSH and then locating the shifted portions at a front portion C and a rear portion B' of the effective symbol A'. In the present invention, the portion C' is referred to as a prefix and the portion B' is referred to as a postfix. That is, the AP1 symbol consists of the prefix, the effective symbol, and the postfix.

Here, two frequency shift values +fSH and -fSH used for the P1 symbol and the AP1 symbol have the same magnitude with opposite signs. That is, frequency shifting for the P1 symbol and the AP1 symbol is performed in opposite directions. The lengths of the portions C and C' copied to the front portion of the effective symbol may be set to be different from each other and the lengths of the portions B and B' copied to the rear portion of the effective symbol may also be set to be different from each other. Alternatively, the lengths of the portions C and C' may be set to be different from each other while the lengths of the portions B and B' are set to be equal to each other or the lengths of the portions C and C' may be set to be equal to each other while the lengths of the portions B and B' are set to be different from each other. In another embodiment of the present invention, the effective symbol length of the P1 symbol and the effective symbol length of the AP1 symbol may also be set to be different from each other. In another embodiment, a Complementary Set of Sequences (CSS) different from that of the P1 symbol may be used for tone selection and data scrambling in AP1.

As described above, in one embodiment of the present invention, a P1 symbol has an offset of 30 samples and an AP1 symbol has an offset of 27 samples. That is, in the case of the P1 symbol, 548 (= 1024/2+30) samples may be included in the prefix C and 482 (= 1024/2-30) samples may be included in the postfix C since the effective symbol may include 1024 samples and the offset of the prefix and the postfix may be 30 samples. In the case of the AP1 symbol, 539 (= 1024/2+27) samples may be included in the prefix C' and 485 (= 1024/2-27) samples may be included in the postfix B' since the effective symbol may include 1024 samples and the offset of the prefix C' and the postfix B' may be 27 samples.

According to the present invention, the P1 symbol does not reduce AP1 symbol detection performance and the AP1 symbol also does not reduce P1 symbol detection performance since the P1 symbol and the AP1 symbol generated in the structures shown in FIG. 10(A) are inserted into frames. In addition, detection performance of the P1 symbol and detection performance of the AP1 symbol are almost the same. In addition, it is possible to minimize complexity of the receiver since the P1 symbol and the AP1 symbol have similar structures.

Here, the P1 symbol and the AP1 symbol may be continuously transmitted or may be transmitted at different positions in a frame. When the P1 symbol and the AP1 symbol are transmitted at different positions, it is possible to achieve high time diversity effects for preamble symbols. In an embodiment of the present invention, the P1 symbol and the AP1 symbol are continuously transmitted.

FIG. 10(B) illustrates an embodiment of an AP1 symbol generator. The AP1 symbol generator according to an embodiment of the present invention includes a Carrier Distribution Sequence (CDS) table module 12010, a Modulation Signaling Sequence (MSS) module 12020, a Differential Binary Phase Shift Keying (DBPSK) mapping module 12030, a scrambling module 12040, a padding module 12050, an IFFT module 12060, and/or a C'-A'-B' structure module 12070.

The scrambling module 12060 scrambles an AP1 symbol using a scrambling sequence. In an embodiment of the present invention, the scrambling sequence used here is '111001100110001' that is optimized taking into consideration the PAPR and the OOB power level.

The C'-A'-B' structure module 12070 forms prefix, effective symbol, and postfix structures of the AP1 symbol.

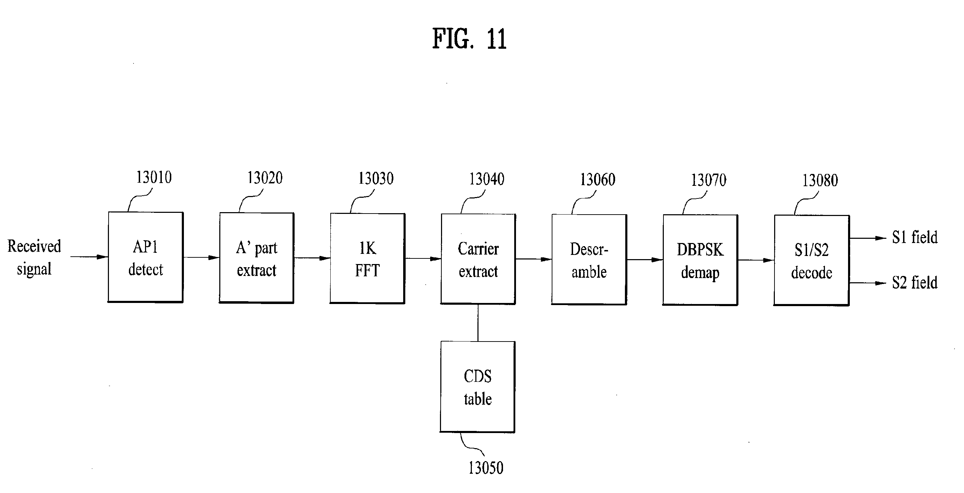

FIG. 11 illustrates an AP1 detection and decoding module according to an embodiment of the present invention.

The AP1 detection and decoding module may include an AP1 detector 13010, an effective symbol detector 13020, an FFT module 13030, a carrier extractor 13040, a CDS table module 13050, a descramble module 13060, a DBPSK demapper 13070, and/or an S1/S2 decoder 13080.

First, the AP1 detector 13010 detects an AP1 symbol from a received signal input to the AP1 detector 13010 using C-A-B correlation characteristics of the received signal.

The effective symbol detector 13020 extracts an A' part, which is an effective symbol part of the AP1 symbol, from the AP1 symbol.

The FFT module 13030 performs 1 K-FFT to transform the data into frequency-domain data.

The carrier extractor 13040 extracts only a signal at an active carrier position from the frequency-domain data using a CDS table received from the CDS table module 13050.

The descramble module 13060 performs descrambling of the data.

The DBPSK demapper 13070 performs DBPSK differential demodulation.

The S1/S2 decoder 13080 decodes S1 and S2 fields to acquire a signaling field. Here, in a decoding method according to an embodiment of the present invention, correlation is performed on all possible combinations of sequences of the S1 and S2 fields and combining is performed on the S1 field that is transmitted twice for the effective symbol, once for each of both ends of the effective symbol, to acquire SNR/decoding gain. Alternatively, the S1 field may be decoded twice and whether or not the two decoded fields are identical may then be determined and the reliability of the decoded data may be used for decoding.

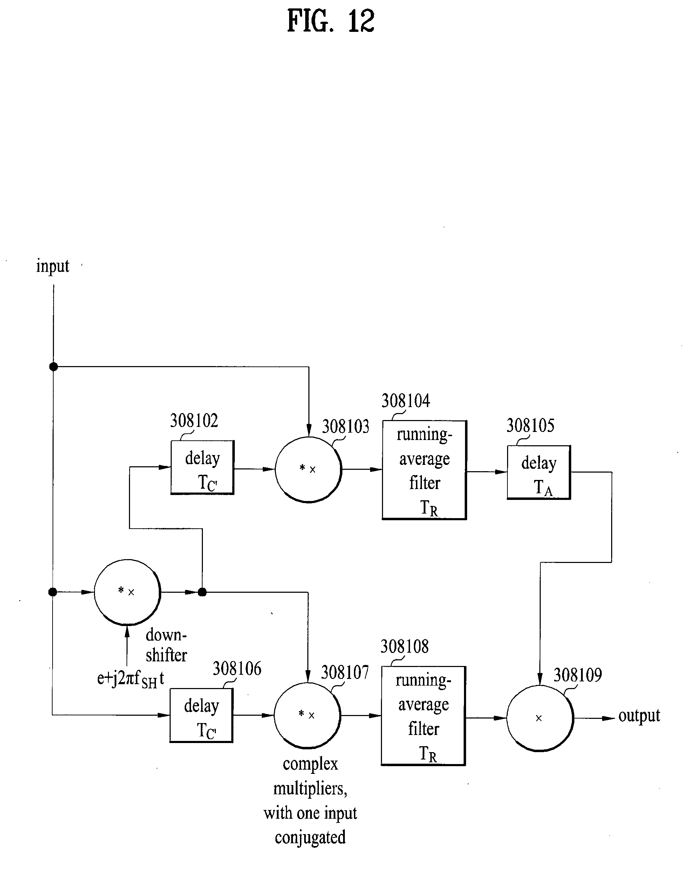

FIG. 12 illustrates an AP1 symbol detector according to an embodiment of the present invention.

The AP1 symbol detector may also be referred to as a C'-A'-B' preamble detector. That is, a digital signal produced by conversion of an ADC or a signal output from a P1 symbol detector is input to a down shifter 308101, a first conjugator 308103, and a second delayer 308106.

The down shifter 308101 performs inverse modulation on the input signal by multiplying the input signal by $e^{j2\pi f_{SH}t}$. When the down shifter 308101 performs inverse modulation on the frequency-shifted input signal, the frequency-shifted input signal is restored into an original signal. That is, although the down shifter 308101 has the same structure as the down shifter of the P1 symbol detector, the down shifter 308101 differs from the down shifter of the P1 symbol detector in that the down shifter 308101 performs inverse modulation in the opposite frequency direction. The signal produced through inverse modulation by the 308101 is output to a first delayer 308102 and a second conjugator 308107.

The first delayer 308102 delays the inverse-modulated signal by the length of the C' part $T_{C'}$ and outputs the delayed signal to the first conjugator 308103. The first conjugator 308103 complex-conjugates the delayed signal and multiples the conjugated signal by the input signal and then outputs the multiplied signal to a first filter 308104. The first filter 308104 removes an unnecessary modulation component from the input signal using a running average filter and then outputs the filtered signal to a third delayer 308105. The third delayer 308105 delays the filtered signal by the length $T_{A'}$ of the A' part (i.e., the effective symbol) and outputs the delayed signal to a multiplier 308109.

The second delayer 308106 delays the input signal by the length $T_{B'}$ of the B' part and outputs the delayed signal to the second conjugator 308107. The second conjugator 308107 complex-conjugates the delayed signal and multiplies the conjugated signal by the inverse-modulated signal and then outputs the multiplied signal to a second filter 308108. The second filter 308108 removes an unnecessary modulation component from the input signal using a running average filter and then outputs the filtered signal to the multiplier 308109.

The multiplier 308109 multiplies the output of the second filter 308109 by the signal that has been delayed by the length $T_{A'}$ of the A' part. In this manner, it is possible to detect an AP1 symbol from each frame of a received broadcast signal. Here, the length $T_{C'}$ of the C' part and the length $T_{B'}$ of the B' part are the same as described above.

Hereinafter, a signaling method through a P1 symbol and an AP1 symbol will be described with regard to an embodiment of the present invention.

Each frame begins with a P1 symbol (accompanied in some cases by an additional P1 symbol (aP1)), followed by a number of P2 symbols.

As described above, according to an embodiment of the present invention, data associated with a new broadcast system different from a conventional terrestrial broadcast system may be transmitted through a specific PLP or frame while sharing an RF frequency band with the conventional terrestrial broadcast system. In this case, a transmitting side may define a system or a currently transmitted signal via signaling information of the aforementioned P1 symbol or the AP1 symbol.

Thus, a receiver may acquire the transmission characteristics of a signal that is currently transmitted in a frame and may determine whether decoding is performed using the signaling information of the P1 symbol or the AP1 symbol.

Thus, the present invention provides a P1 and AP1 signaling method through the P1 symbol and the AP1 symbol in order to efficiently transceive data of a new broadcast system when a conventional terrestrial broadcast system transmits data together with the new broadcast system.

That is, the purpose of the P1 signaling and the AP1 signaling, which is carried by the P1 symbol and the AP1 symbol in every frame, is to indicate the transmission type and basic transmission parameters.

The P1 symbol according to an embodiment of the present invention has the capability to convey 7 bits for signaling. The P1 symbol is a fixed pilot symbol that carries S1 and S2 fields and is located in the beginning of the frame within each RF-channel. Since the preamble (both P1 and P2 symbols) may have different formats, the main use of the P1 signaling is to identify the preambl e itself.

The information it carries is of two types, the first type associated to the S1 bits of the P1 is needed to distinguish the preamble format and the second type associated to the S2 bi ts of the P1 helps the receiver to rapidly characterize the basic transmission parameters.

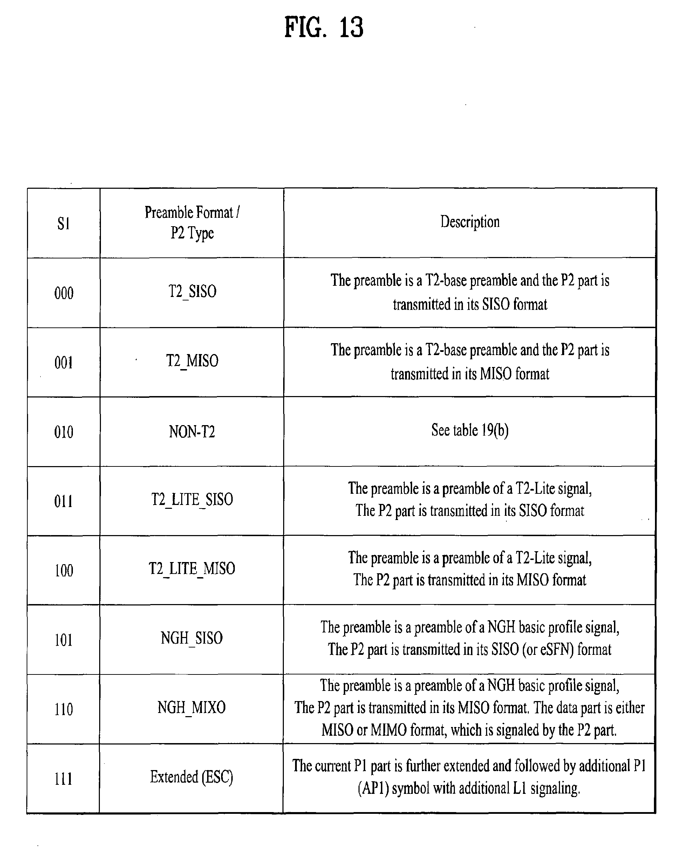

FIG. 13 illustrates an S1 field of a P1 symbol according to an embodiment of the present invention.

As described above, the S1 field of the P1 symbol identifies a preamble format of a currently transmitted signal and the format of the P2 symbol(s) that take part of the preamble. According to an embodiment of the present invention, the P2 symbol(s) that take part of the preamble may be referred to as a P2 part. Hereinafter, S1 field values shown in FIG. 13 will each be described. The S1 field values shown in FIG. 13 may be changed according to a designer's intention.

When an S1 field value is from 000 to 100, the currently transmitted signal refers to a signal processed in a conventional terrestrial broadcast system such as T2.

When an S1 field value is 000, a preamble format refers to a T2_SISO preamble. That is, the preamble is a preamble of a T2-base signal and the P2 part is transmitted in its SISO format.

When an S1 field value is 001, a preamble format refers to a T2_MISO preamble. That is, the preamble is a preamble of a T2-base signal and the P2 part is transmitted in its MISO format.

When an S1 field value is 010, a preamble format refers to a Non-T2 preamble which indicates that data is not processed according to a T2 system and is a reserved region for future use. A detailed description is referred to Table 19(b) of the standard document of a T2 system.

When an S1 field value is 011, a preamble format refers to a T2_LITE_SISO preamble. That is, the preamble is a preamble of a T2-Lite signal and the P2 part is transmitted in its SISO format.

When an S1 field value is 100, a preamble format refers to a T2_LITE_MISO preamble. That is, the preamble is a preamble of a T2-Lite signal and the P2 part is transmitted in its MISO format.

When an S1 field value is from 101 to 110, the currently transmitted signal refers to a signal processed in a new broadcast system according to an embodiment of the present invention, but not in a conventional terrestrial broadcast system. As described above, the new broadcast system according to an embodiment of the present invention may be divided into four profiles such as a base profile, a MIMO profile, a Hybrid profile, and a Hybrid MIMO profile according to a method of data processing. According to an embodiment of the present invention, with regard to a preamble of the base profile, a preamble format is defined in an S1 field and signaling performed, and with regard to the remaining profiles, an extended type is defined in an S1 field and signaling is performed.

The preamble of the base profile may be divided into an NGH_SISO preamble and an NGH_MIXO preamble according to a processing mode.

In detail, when an S1 field value is 101, a preamble format refers to the NGH_SISO preamble of the base profile. That is, the preamble is a preamble of a signal of the new broadcast system and the P2 part is transmitted in its SISO format.

When an S1 field value is 110, a preamble format refers to an NGH_MISO preamble. That is, the preamble is a preamble of a signal of the new broadcast system and the P2 part is transmitted in its MISO format or MIMO format.

When an S1 field value is 111, a preamble format is of an extended type. In this case, a detailed preamble format and a type of a P2 part may be defined in an S2 field 1. The current P1 symbol may be followed with an AP1 symbol providing additional signaling.

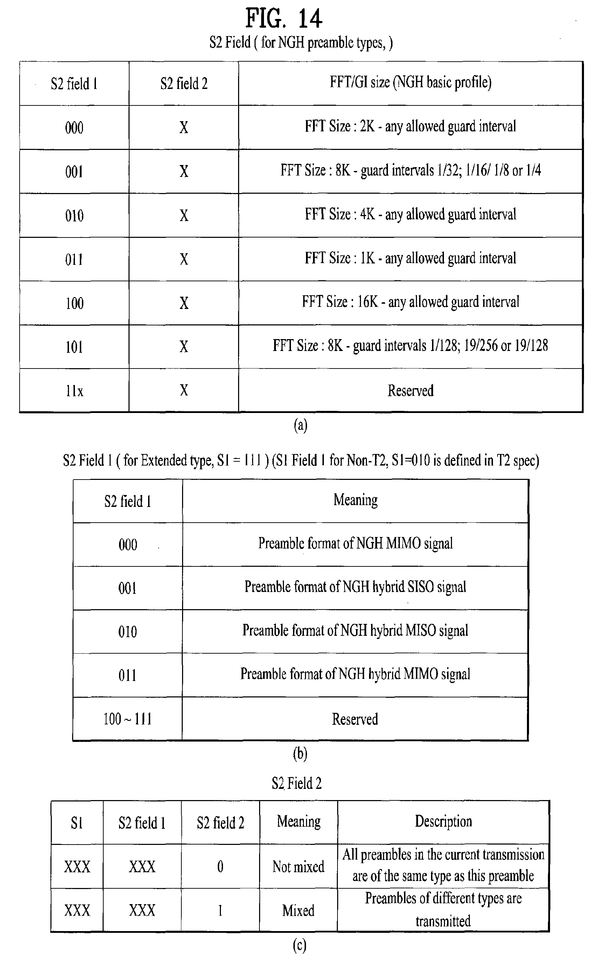

FIG. 14 illustrates an S2 field of a P1 symbol according to an embodiment of the present invention.

According to an embodiment of the present invention, an S2 field may include 3 bits of an S2 field 1 and 1 bit of an S2 field 2. FIGS. 14-(a) and (b) refer to the S2 field 1 and FIG. 14-(c) refers to the S2 field 2. Hereinafter, each field will be described.

The S2 field 1 may be the first 3 bits of the S2 field and may include complementary information. In addition, the S2 field 1 may signal the following information regardless of values of the S2 field 2.

When the preamble format is of the type T2_SISO, T2_MISO, T2_LITE_SISO or T2_LITE_MISO, the S2 field 1 indicates the FFT size and gives partial information about the guard interval for the remaining symbols in the T2-frame.

When the preamble format is of the type NGH_SISO, or NGH_MISO, the S2 field 1 indicates the FFT size and gives partial information about the guard interval for the remaining symbols in the NGH-frame as described in FIG. 14-(a).

When the preamble is of the type of "extended", the value of the S2 field 1 shall be defined as described in FIG. 14-(b). That is, the S2 field 1 may signal a preamble format and a P2 part type when a broadcast system of the present invention includes the MIMO profile, the Hybrid profile, and the Hybrid MIMO profile. According to an embodiment of the present invention, the Hybrid profile may be distinguished into an NGH_Hybrid SISO signal and an NGH_Hybrid MISO signal according to a processing mode.

In this case, P2 symbols of the NGH hybrid SISO signal and the NGH hybrid MISO signal have different pilot patterns, and thus, it is necessary to perform signaling such that a receiver may distinguish and decode the hybrid SISO signal and the NGH hybrid MISO signal. In addition, in the case of an NGH hybrid MISO signal and a Hybrid MIMO signal of the Hybrid profile, the receiver cannot decode frame information according to the number of antennas of the receiver and the MIMO decoding capability of the receiver, and thus, it is necessary to separately signal the NGH hybrid MISO signal and the Hybrid MIMO signal for an efficient operation of the receiver.

Thus, an embodiment of the present invention provides a signaling method, for distinguishing signals corresponding to the MIMO profile, the Hybrid profile, and the Hybrid MIMO profile into signals corresponding to a MIMO profile, a Hybrid SISO profile, a Hybrid MISO profile, and a Hybrid MIMO profile, and signaling each preamble format through the S2 field 1.

In detail, when a value of the S2 field 1 is 000, a current preamble format refers to a preamble of the NGH MIMO signal. When a value of the S2 field 1 is 001, a current preamble format refers to a preamble of the NGH hybrid SISO signal. In addition, when a value of the S2 field 1 is 010, a current preamble format refers to a preamble of the NGH hybrid MISO signal. When a value of the S2 field 1 is 011, a current preamble format refers to a preamble of the NGH hybrid MIMO signal.

According to an embodiment of the present invention, the S2 field 2 is Mixed bit. This bit indicates whether the preambles are all of the same type or not. The bit is valid for all values of S1 and S2 field 1. The meaning of this bit is described in FIG. 14-(c).

In detail, as show in FIG. 14-(c), when a value of the S2 field 2 is 0, this means that all preambles of currently transmitted frames are of the same type, and when a value of the S2 field 2 is 1, this means that preambles of the currently transmitted frames are of different types.

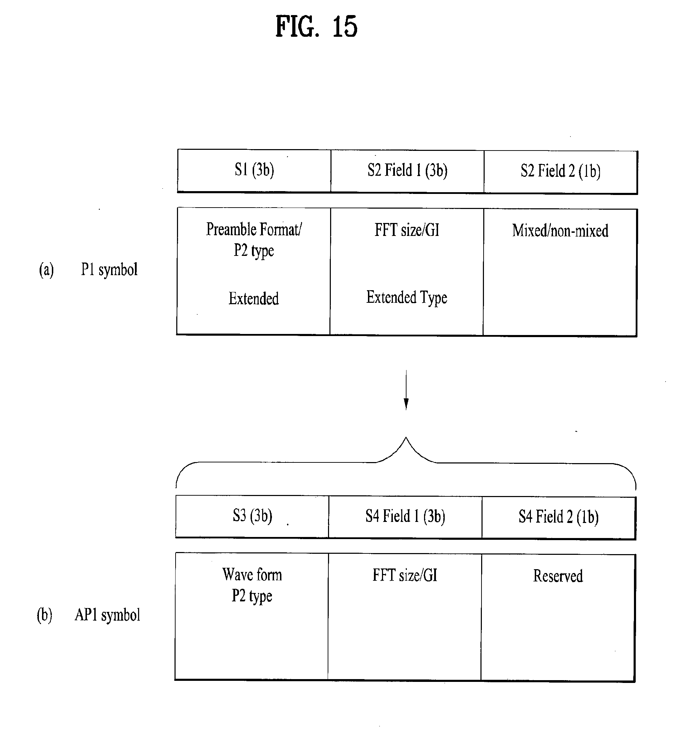

FIG. 15 illustrates a signaling method according to an embodiment of the present invention.

As described above, the present invention provides a signaling method through the P1 symbol and the AP1 symbol in order to efficiently transceive data of a new broadcast system when a conventional terrestrial broadcast system transmits data together with the new broadcast system.

Thus, according to an embodiment of the present invention, as shown in FIG. 15(a), in an S1 field of a P1 symbol, the Preamble Format/P2 type of base profiles of a conventional terrestrial broadcast system and new broadcast system and an extended type for defining a different profile of the new broadcast system are defined and signaled. In addition, according to an embodiment of the present invention, as shown in FIG. 15(b), in the S2 field 1, preamble formats of signals corresponding to the FFT size/Guard Interval and extended type of base profiles of the conventional terrestrial broadcast system and NGH broadcast system are defined and signaled.

However, the capacity of the P1 symbol is limited, and thus, there is a limit in defining all transmission characteristics of a currently transmitted signal using only the S1 field and S2 field of the P1 symbol. Thus, an embodiment of the present invention provides a signaling method of transmitting information about a detailed parameter for decoding a currently transmitted signal through an AP1 symbol as well as through the P1 symbol. In particular, the present invention provides a signaling method of transmitting an extended type of preamble of a parameter of a corresponding signal through an AP1 symbol.

Thus, a receiver of a broadcast system according to an embodiment of the present invention may check whether a preamble is of an extended type, and a preamble format of the extended type through the S1 and S2 fields of the P1 symbol, and may determine whether decoding is performed on the AP1 symbol. In addition, the receiver of the broadcast system according to an embodiment of the present invention may perform the decoding on the AP1 symbol and may decode a transmitted signal according to transmission characteristics using an extended type of preamble transmitted through the AP1 symbol and a parameter of a corresponding signal.

That is, it may be confirmed that the receiver of the signal or basic profile of the conventional terrestrial broadcast system does not have to decode an AP1 symbol using information of the P1 symbol. Thus, in a signaling method according to the present invention, a receiver can be efficiently designed and system expandability can be ensured, thereby increasing signaling capacity.

FIG. 15-(b) illustrates a signaling method through an AP1 symbol according to an embodiment of the present invention.

The AP1 symbol provides 7 bits for additional signaling field. When the AP1 symbol is added to the P1 symbol, the preamble can carry total 14 bits of signaling field. This capacity increase is a purpose of the AP1 symbol.

The AP1 symbol that carries S3 and S4 signaling fields and is located right after the P1 symbol as described in FIG. 15-(b).

The signaling method shown in FIG. 15-(b) corresponds to a case in which a broadcast system according to an embodiment of the present invention corresponds to a Hybrid MIMO profile.

An S3 field may have a signal of 3 bits and may indicate wave form used in the Hybrid MIMO profile. An S4 field 1 may have a size of 3 bits and may indicate a size of FFT and Guard Interval of a currently transmitted Hybrid MIMO profile signal. An S4 field 2 has a size of 1 bit and is reserved for future use.

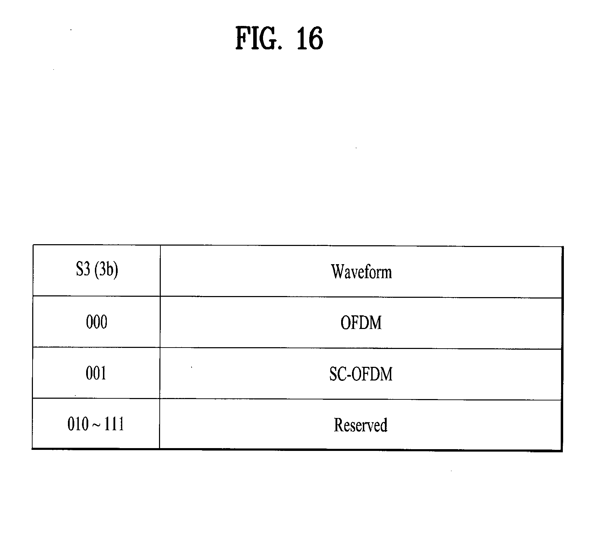

FIG. 16 illustrates an S3 field of an AP1 symbol according to an embodiment of the preset invention.

As described above, the S3 field may have a size of 3 bits and may indicate waveform used in the Hybrid MIMO profile.

Whether a signal of a current broadcast system is a MISO or MIMO signal is defined in the S2 field 1 of the P1 symbol shown in FIG. 14-(b), only a waveform of the signal may be defined and signaled in an S3 field of the AP1 symbol. Thus, a receiver may decode the S3 field to obtain information about the waveform and may decode a P2 symbol and data symbols included in a frame using a decoding method according to the corresponding waveform.

The aforementioned waveform may be an OFDM waveform or a single carrier (SC)-OFDM waveform. SC-OFDM is a single carrier orthogonal waveform of OFDM which uses orthogonal frequency subbands of varying widths. A decoding method based on the SC-OFDM waveform may be applied only to data transmitted through a satellite.

In detail, when an S3 field value is 000, the P2 symbol and all data symbols in the frame are modulated using OFDM waveform.

When an S3 field value is 001, the P2 symbol and all data symbols in the frame are modulated using SC-OFDM waveform.

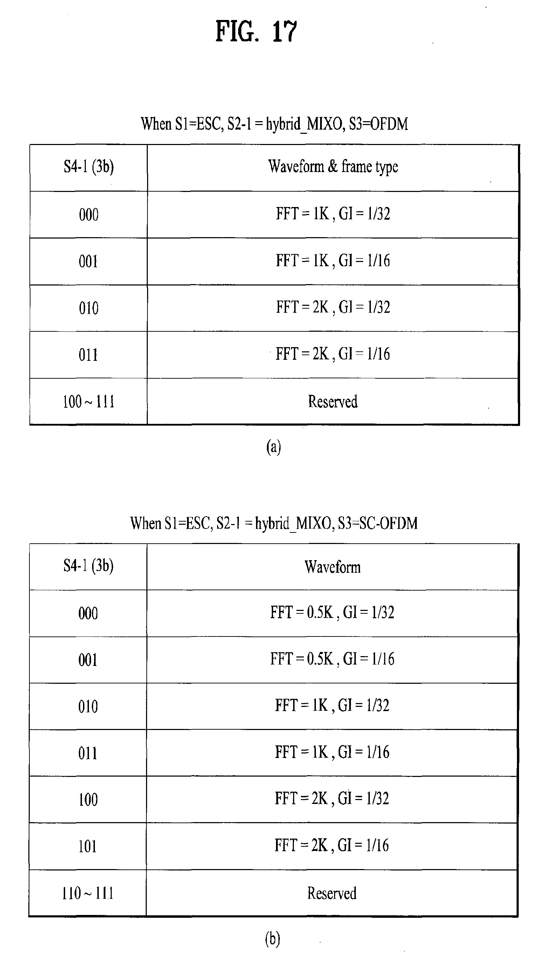

FIG.17 illustrates an S4 field 1 of an AP1 symbol according to an embodiment of the present invention.

As described above, the S4 field 1 may have a size of 3 bits and may indicate an FFT and GI size of a currently transmitted Hybrid MIMO profile signal.

The first 3 bits of the S4 field are referred to as an S4 field 1. According to the waveform information carried by an S3 field, the S4 field 1 indicates the corresponding FFT size and the Guard Interval for the remaining symbols in the frame. The value and meaning of the S4 field 1 are given in FIG. 17-(a) and FIG. 17-(b) for OFDM and SC-OFDM waveform case respectively.

In detail, FIG. 17-(a) indicates the FFT size and Guard Interval of the OFDM symbols in the frame.

When a value of the S4 field 1 is from 000 to 011, each value indicates the specific FFT size and the Guard Interval. When a value of the S4 field 1 is from 100 to 111, this indicates that the S4 field 1 is reserved for future use.

FIG.17-(b) indicates the FFT size and guard interval of the SC-OFDM symbols in the frame.

When a value of the S4 field 1 is from 000 to 101, each value indicates the specific FFT size and the Guard Interval. When a value of the S4 field 1 is from 110 to 111, this indicates that the S4 field 1 is reserved for future use.

As shown in FIGS. 17-(a) and 17-(b), an OFDM signal may support an FFT size of 1 K and 2 K and a Guard Interval of 1/16 and 1/32 and an SC-OFDM signal may support an FFT size of 0.5 K, 1 K and 2K and a GI size of 1/16 and 1/32.

According to an embodiment of the present invention, a new broadcast system may be classified into four profiles such as a base profile, a MIMO profile, a hybrid profile, and a hybrid MIMO profile according to a processing mode. Hereinafter, a MIMO matrix for processing a MIMO signal in a broadcast system based on the hybrid MIMO profile will be described.

The hybrid MIMO profile covers a combination of terrestrial and satellite transmission requiring a double aerial and tuner set-up on receiver side. Once again, a part of the configurations can be handled by the MIMO profile receiver, and other configurations require a special hybrid MIMO receiver. The hybrid MIMO profile is a profile facilitating the use of MIMO on the terrestrial and/or satellite elements within a hybrid transmission scenario.

As described above, the broadcast system based on the hybrid MIMO profile may use the broadcast signal transmitter of FIG. 1 and the broadcast signal receiver of FIG. 2. However, the objective of the broadcast system based on the hybrid MIMO profile is to transceive a broadcast signal through a terrestrial wave or a satellite, and thus, a broadcast signal transcieved through the terrestrial wave and a broadcast signal transcieved through the satellite may be processed by two independent paths, respectively. Thus, the broadcast signal transmitter of FIG. 1 and the broadcast signal receiver of FIG. 2 may be applied to two paths, respectively. In addition, each path can process data using a MIMO method, and thus, one of the two paths must use two transmission antennas. In this case, the broadcast system based on the hybrid MIMO profile may MIMO process a signal using the MIMO matrix described with reference to Expression 1 or 4.

In addition, the broadcast system based on the hybrid MIMO profile may be reclassified into two modes such as a hybrid MIMO single frequency network (SFN) and a hybrid MIMO multi frequency network (MFN).

The hybrid MIMO SFN describes the case where the satellite and terrestrial parts of the transmission utilise the same carrier frequency and radiate synchronised signals intended to c reate an effective SFN.

The hybrid MIMO MFN describes the case where the satellite and terrestrial parts of the transmission are on different carrier frequencies, and do not necessarily share any common f rame or symbol timing at the physical layer. At least one of the transmission elements (i.e. terr estrial or satellite) must be configured using multiple antennas.

Hereinafter, parameters of the MIMO matrix applied to the broadcast system based on the hybrid MIMO profile will be described.

According to an embodiment of the present invention, the broadcast system based on the hybrid MIMO profile corresponds to a 4x2 hybrid network case and has objective to implement 4x2 MIMO using a satellite and a terrestrial wave.

The following Expression 6 shows a matrix for implementing a channel used in the 4x2 hybrid network case.

[Expression 6]

$$
\begin{bmatrix} r_1 \\ r_2 \end{bmatrix} = \begin{bmatrix} M_{11} & M_{12} & \beta\lambda S(1-j\alpha) & \beta\lambda S(1+j\alpha) \\ M_{21} & M_{22} & \beta\lambda S(\alpha-j) & \beta\lambda S(\alpha+j) \end{bmatrix} \begin{bmatrix} T_1 \\ T_2 \\ T_{S1} \\ T_{S2} \end{bmatrix}
$$

In Expression 6, $M_{ij}$ is terrestrial MIMO channel matrix (6-tap) channel variable to define environments of a terrestrial channel and S is single-tap Ricean variable. $\lambda$ is shadow-fading parameter, $\alpha$ is the satellite cross-polar discrimination parameter and $\beta$ is a fixed satellite transmission factor. $r_1$ and $r_2$ are channel signals received by a receiver. $T_1$, $T_2$, $T_{s1}$, and $T_{s2}$ are signals to be transmitted by two transmission antennas of a terrestrial wave and two transmission antennas of a satellite. $T_1$ and $T_{s1}$, and $T_2$ and $T_{s2}$ may transmit the same signal.

Expression 6 may be used when 2x2 MIMO is implemented using SFN in a satellite and a terrestrial wave. That is, a signal processed according to Equation 6 is MIMO processed and is transmitted through the satellite with regard to a broad area, thereby increasing throughput, and is transmitted through the terrestrial wave with regard to a satellite-invisible area, thereby increasing transmission efficiency.

The following Expression 7 shows a MIMO matrix used in a 4x2 hybrid network case.

[Expression 7]

$$
\begin{bmatrix} g_q(Tx1) \\ g_q(Tx2) \end{bmatrix} = \sqrt{2}\begin{bmatrix} 1 & 0 \\ 0 & e^{j\phi(q)} \end{bmatrix}\begin{bmatrix} \sqrt{\beta} & 0 \\ 0 & \sqrt{1-\beta} \end{bmatrix}\begin{bmatrix} \cos\theta & \sin\theta \\ \sin\theta & -\cos\theta \end{bmatrix}\begin{bmatrix} \sqrt{\alpha} & 0 \\ 0 & \sqrt{1-\alpha} \end{bmatrix}\begin{bmatrix} f_q(Tx1) \\ f_q(Tx2) \end{bmatrix}
$$

$$
, e^{j\phi(q)} = \cos\phi(q) + j\sin\phi(q),\ \phi(q) = \frac{2\pi}{N}q, q = 0,..,N_{data}-1,(N=9)
$$

The MIMO matrix shown in Expression 7 may have the same configuration and may include parameters having the same functions as the MIMO matrix described with reference to the aforementioned Expression 1 or 4. Thus, according to an embodiment of the present invention, the broadcast system based on the hybrid MIMO profile may MIMO process signals using the MIMO matrix of Expression 1, 4, or 7. However, when data is transmitted through a satellite, a circular polar antenna is used and fade phenomenon less occurs than the case of the terrestrial wave, and thus, a problem in terms of power imbalance may not occur. Thus, parameters of the matrix of Expression 7 may be different from parameters applied to Expression 1 or 4.

The following Table 3 shows parameters applied to the MIMO matrix of Expression 7.

[Table 3]

| n_bpcu | Modulation | 0dB | | | 3dB | | | 6dB | | |
|---|---|---|---|---|---|---|---|---|---|---|
| | | $\beta$ | $\theta$ | $\alpha$ | $\beta$ | $\theta$ | $\alpha$ | $\beta$ | $\theta$ | $\alpha$ |
| 4 | $f_q$(Tx1): QPSK<br>$f_q$(Tx2):QPSK | 0.5 | $\mathrm{atan}(\sqrt{2}+1)$ | 0.50 | 1/3 | $\mathrm{atan}(\sqrt{2}+1)$ | 0.50 | 0.20 | $\mathrm{atan}(\sqrt{2}+1)$ | 0.50 |
| 6 | $f_q$(Tx1):QPSK<br>$f_q$(Tx2):16QAM | 0.50 | 45° | 0.44 | 1/3 | 0 | 0.50 | 0.20 | 0° | 0.50 |
| 8 | $f_q$(Tx1 ):16QAM<br>$f_q$(Tx2):16QAM | 0.50 | $\mathrm{atan}\left(\frac{\sqrt{2}+4}{\sqrt{2}+2}\right)$ | 0.50 | 1/3 | 25° | 0.50 | 0.20 | 0° | 0.50 |
| 10 | $f_q$(Tx1):16QAM<br>$f_q$(Tx2):64QAM | 0.50 | 22° | 0.50 | 1/3 | 15° | 0.50 | 0.20 | 0° | 0.50 |

Deliberate power imbalance between two Tx antennas

22

Different parameters of the parameters shown in Table 3 may be applied according to the hybrid MIMO SFN or the hybrid MIMO MFN.

With regard to the hybrid MIMO SFN, in the case of terrestrial power imbalance, the sat ellite transmission maintains a fixed 0 dB imbalance, but adopts the same values of parameters θ and α as the terrestrial transmission for the chosen imbalance. In addition, with regard to the hybrid MIMO SFN, there is no case in which all signal transmitted through two antennas are modulated in QPSK. Thus, with regard to the hybrid MIMO SFN, parameters corresponding to cases in which $n_{bpcu}$ of Table 3 is 6, 8, and 10 may be applied.

With regard to the hybrid MIMO MFN, parameters for 0 dB between satellite transmitting antennas may be applied. In addition, when a signal is transmitted through a satellite, if the transmitted signal is modulated in 64 QAM to reduce power, stable transmission cannot be performed, and thus, each signal is not modulated in 64QAM. Accordingly, with regard to the hybrid MIMO MFN, only parameters corresponding to cases in which $n_{bpcu}$ of Table 3 is 4, 6, and 8 may be applied.

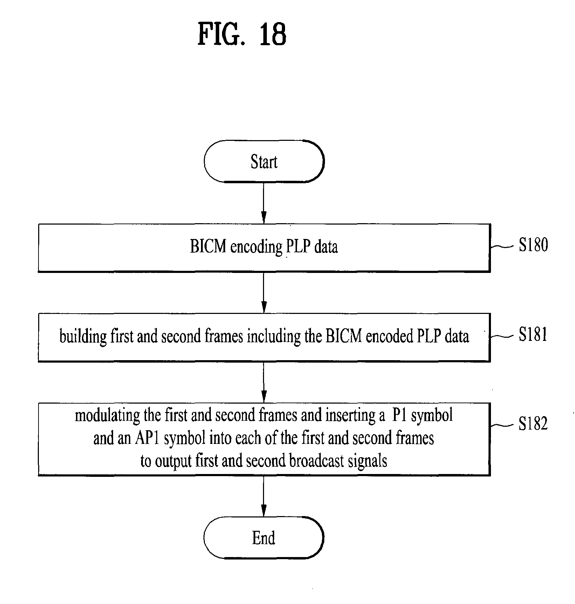

FIG. 18 is a flowchart of a method of transmitting a broadcast signal according to an embodiment of the present invention.

The BICM encoder 101300 according to an embodiment of the present invention BICM encodes PLP data (S180). As described with reference to FIG. 2, the BICM encoder 101300 may include the first BICM encoding block for MISO PLP processing, the second BICM encoding block for MIMO PLP processing, and the third BICM encoding block for performing MISO or MIMO encoding on L1-pre signaling information and L1-post signaling information. In particular, the second BICM encoding block for MIMO PLP processing may include the MIMO encoder 604250.

The MIMO encoder 604250 according to an embodiment of the present invention may MIMO encode the input PLP data of the 2 paths using a MIMO matrix and output the MIMO-encoded PLP data through the 2 paths. The MIMO matrix of the present invention may include spatial multiplexing, Golden Code (GC), full-rate full diversity code, and linear dispersion code. The MIMO encoder 604250 according to an embodiment of the present invention may perform MIMO encoding using the MIMO matrix described with reference to Expressions 1 and 4. The MIMO matrix may include a precoding matrix and a phase hopping matrix. The precoding matrix may be used as concept including a rotation matrix and a power imbalance matrix. The rotation matrix can express both input signals S1 and S2 provided through antenna 1 and antenna 2 even in a fully correlated channel, thereby increasing diversity. In addition, when the Euclidian distances of the input signals S1 and S2 are different, the power imbalance matrix may make the Euclidian distances equal. Accordingly, in the case in which the precoding matrix is applied, it is possible to reduce performance degradation when signals output from the transmission antennas have different powers and signals output through the transmission antennas have been modulated according to different modulation schemes. The available power imbalances are 0 dB, 3 dB and 6 dB. The above Table 2 summarizes values of such parameters determined through Expressions 4 and 5 when the power imbalance is 0 dB, 3 dB, and 6 dB. As described with reference to FIG. 2, if the MIMO encoder i s located next to the time interleaver, the receiver needs to first perform MIMO decoding on eac h data item and therefore each data item may be output on a bit basis and time deinterleaving and cell deinterleaving processes may then be performed. In this case, although data is input i n units of bits to the time deinterleaver, information regarding the units of symbols of the input data is additionally needed to perform time deinterleaving. Accordingly, memory load of the broadcast signal receiver may be increased since the broadcast signal receiver should store information regarding symbol mapping of input bits required for the deinterleaving procedure. Accordingly, in an embodiment of the present invention, MIMO encoding is performed after constellation mapping.

When the MIMO encoding is processed using a broadcast system of the Hybrid MIMO profile, parameters of Expression 7 and Table 3 may be used.

Then, the frame builder 101400 according to an embodiment of the present invention builds first and second frames including the BICM encoded PLP data (S183).

The OFDM generator 101500 according to an embodiment of the present invention inserts a P1 symbol and an AP1 symbol into each of the first and second frames and modulates the first and second frames to output first and second broadcast signals (S184). In detail, as described with reference to FIG. 7, the P1 insertion module 302161 and 302162 may insert a P1 symbol into each frame at a start portion thereof and output the resulting frame to the AP1 insertion module 302171 and 302172. In addition, the AP1 insertion module 302171 and 302172 may insert an AP1 symbol into the P1 symbol after the P1 symbol and output the resulting frame to the DACs 302181 and 302182. Here, the insertion of the P1 symbol and the AP1 symbol may be performed by the P1 insertion module 302161 and 302162. In this case, the AP1 insertion module 302171 and 302172 are omitted. The configuration of the P1 symbol and AP1 symbol has been described with reference to FIGS. 9 and 10.

As described with reference to FIGS. 13 and 14, the P1 symbol carries S1 and S2 fields and is located in the beginning of each of the first and second frames. The S1 field of the P1 symbol identifies a preamble format P1, and in detail, identifies the format of the P2 symbol(s) that take part of the preamble. As described above, a new broadcast system according to an embodiment of the present invention may include four profiles such as a base profile, a MIMO profile, a Hybrid profile, and a Hybrid MIMO profile. Thus, according to an embodiment of the present invention, with regard to a preamble of the base profile, that is, a preamble of NGH SISO or MISO, a preamble format is defined in an S1 field and signaling performed, and with regard to the remaining profiles, an extended type is defined in an S1 field and signaling is performed.

In addition, when the preamble is of the type of "extended", the value of the S2 field 1 shall be defined as described in FIG. 14-(b). That is, the S2 field 1 may signal a preamble format and a P2 part type when a broadcast system according to the present invention includes the MIMO profile, the Hybrid profile, and the Hybrid MIMO profile. According to an embodiment of the present invention, the Hybrid profile may be distinguished into an NGH_Hybrid SISO signal and an NGH_Hybrid MISO signal according to a processing mode.

In this case, P2 symbols of the NGH hybrid SISO signal and the NGH hybrid MISO signal have different pilot patterns, and thus, it is necessary to perform signaling such that a receiver may distinguish and decode the hybrid SISO signal and the NGH hybrid MISO signal. In addition, in the case of an NGH hybrid MISO signal and a Hybrid MIMO signal of the Hybrid profile, the receiver cannot decode frame information according to the number of antennas of the receiver and the MIMO decoding capability of the receiver, and thus, it is necessary to separately signal the NGH hybrid MISO signal and the Hybrid MIMO signal for an efficient operation of the receiver.

Thus, an embodiment of the present invention provides a signaling method, for distinguishing signals corresponding to the MIMO profile, the Hybrid profile, and the Hybrid MIMO profile into signals corresponding to a MIMO profile, a Hybrid SISO profile, a Hybrid MISO profile, and a Hybrid MIMO profile, and signaling each preamble format through the S2 field 1. Detailed field values and preamble formats have been described with reference to FIGS. 13 and 14.

As described with reference to FIGS. 15 to 17, the AP1 symbol carries S3 and S4 fields and is located right after the P1 symbol.

As described above, the present invention provides a signaling method through the P1 symbol and the AP1 symbol in order to efficiently transceive data of a new broadcast system when a conventional terrestrial broadcast system transmits data together with the new broadcast system.

Thus, according to an embodiment of the present invention, as shown in FIG. 15(a), in an S1 field of a P1 symbol, the Preamble Format/P2 type of base profiles of a conventional terrestrial broadcast system and new broadcast system and an extended type for defining a different profile of the new broadcast system are defined and signaled. In addition, according to an embodiment of the present invention, as shown in FIG. 15(b), in the S2 field 1, preamble formats of signals corresponding to the FFT size/Guard Interval and extended type of base profiles of the conventional terrestrial broadcast system and NGH broadcast system are defined and signaled.

However, the capacity of the P1 symbol is limited, and thus, there is a limit in defining all transmission characteristics of a currently transmitted signal using only the S1 field and S2 field of the P1 symbol. Thus, an embodiment of the present invention provides a signaling method of transmitting information about a detailed parameter for decoding a currently transmitted signal through an AP1 symbol as well as through the P1 symbol. In particular, the present invention provides a signaling method of transmitting an extended type of preamble of a parameter of a corresponding signal through an AP1 symbol.

Thus, a receiver of a broadcast system according to an embodiment of the present invention may check whether a preamble is of an extended type, and a preamble format of the extended type through the S1 and S2 fields of the P1 symbol, and may determine whether decoding is performed on the AP1 symbol. In addition, the receiver of the broadcast system according to an embodiment of the present invention may perform the decoding on the AP1 symbol and may decode a transmitted signal according to transmission characteristics using an extended type of preamble transmitted through the AP1 symbol and a parameter of a corresponding signal.

That is, it may be confirmed that the receiver of the signal or basic profile of the conventional terrestrial broadcast system does not have to decode an AP1 symbol using information of the P1 symbol. Thus, in a signaling method according to the present invention, a receiver can be efficiently designed and system expandability can be ensured, thereby increasing signaling capacity.

In particular, when a broadcast system according to an embodiment of the present invention includes a Hybrid MIMO profile, an S3 field may have a signal of 3 bits and may indicate wave form used in the frame in the Hybrid MIMO profile, as shown in FIG. 15. An S4 field 1 may have a size of 3 bits and may indicate a size of FFT and Guard Interval of a currently transmitted Hybrid MIMO profile signal. Detailed field values and corresponding parameters have been described with reference to FIGS. 16 and 17.

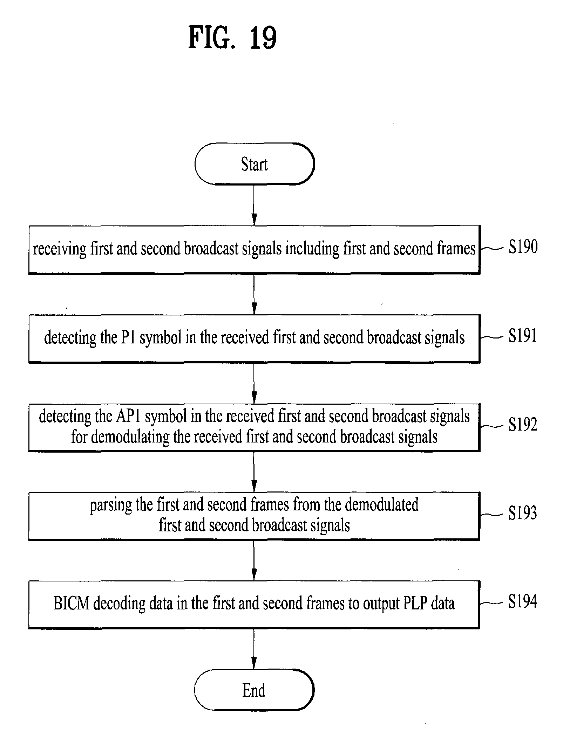

FIG. 19 is a flowchart of a method of receiving a broadcast signal according to an embodiment of the present invention.

The OFDM demodulator 107100 according to an embodiment of the present invention receives first and second broadcast signals including the first and second frames through a plurality of antennas (S190).

Then, the P1 symbol detector 306601 according to an embodiment of the present invention detects the P1 symbol in the received first and second broadcast signals (S191). As described with reference to FIGS. 13 and 14, the P1 symbol carries S1 and S2 fields and is located in the beginning of each of the first and second frames. The S1 field of the P1 symbol identifies a preamble format of a currently transmitted signal and the format of the P2 symbol(s) that take part of the preamble. According to an embodiment of the present invention, the P2 symbol(s) that take part of the preamble may be referred to as a P2 part. In addition, as described above, a new broadcast system according to an embodiment of the present invention may include four profiles such as a base profile, a MIMO profile, a Hybrid profile, and a Hybrid MIMO profile. According to an embodiment of the present invention, with regard to a preamble of the base profile, a preamble format is defined in an S1 field and signaling performed, and with regard to the remaining profiles, an extended type is defined in an S1 field and signaling is performed.

In addition, when the preamble is of the type of "extended", the value of the S2 field 1 shall be defined as described in FIG. 14-(b). That is, the S2 field 1 may signal a preamble format and a P2 part type when a broadcast system according to the present invention includes the MIMO profile, the Hybrid profile, and the Hybrid MIMO profile. According to an embodiment of the present invention, the Hybrid profile may be distinguished into an NGH_Hybrid SISO signal and an NGH_Hybrid MISO signal according to a processing mode.

In this case, P2 symbols of the NGH hybrid SISO signal and the NGH hybrid MISO signal have different pilot patterns, and thus, it is necessary to perform signaling such that a receiver may distinguish and decode the hybrid SISO signal and the NGH hybrid MISO signal. In addition, in the case of an NGH hybrid MISO signal and a Hybrid MIMO signal of the Hybrid profile, the receiver cannot decode frame information according to the number of antennas of the receiver and the MIMO decoding capability of the receiver, and thus, it is necessary to separately signal the NGH hybrid MISO signal and the Hybrid MIMO signal for an efficient operation of the receiver.

Thus, an embodiment of the present invention provides a signaling method, for distinguishing signals corresponding to the MIMO profile, the Hybrid profile, and the Hybrid MIMO profile into signals corresponding to a MIMO profile, a Hybrid SISO profile, a Hybrid MISO profile, and a Hybrid MIMO profile, and signaling each preamble format through the S2 field 1.

Detailed field values and preamble format have been described with reference to FIGS. 13 and 14.

Then, the AP1 symbol detector 306602 according to an embodiment of the present invention detects the AP1 symbol in the received first and second broadcast signals for demodulating the received first and second broadcast signals (S192). As described above, the detection and decoding of the AP1 symbol may be performed by the P1 symbol detector 306601. In this case, the AP1 symbol detector 306602 may be omitted.

As described with reference to FIGS. 15 to 17, the AP1 symbol carries S3 and S4 fields and is located right after the P1 symbol.

As described above, the present invention provides a signaling method through the P1 symbol and the AP1 symbol in order to efficiently transceive data of a new broadcast system when a conventional terrestrial broadcast system transmits data together with the new broadcast system .

Thus, according to an embodiment of the present invention, as shown in FIG. 15(a), in an S1 field of a P1 symbol, the Preamble Format/P2 type of base profiles of a conventional terrestrial broadcast system and new broadcast system and an extended type for defining a different profile of the new broadcast system are defined and signaled. In addition, according to an embodiment of the present invention, as shown in FIG. 15(b), in the S2 field 1, preamble formats of signals corresponding to the FFT size/Guard Interval and extended type of base profiles of the conventional terrestrial broadcast system and NGH broadcast system are defined and signaled.

However, the capacity of the P1 symbol is limited, and thus, there is a limit in defining all transmission characteristics of a currently transmitted signal using only the S1 field and S2 field of the P1 symbol. Thus, an embodiment of the present invention provides a signaling method of transmitting information about a detailed parameter for decoding a currently transmitted signal through an AP1 symbol as well as through the P1 symbol. In particular, the present invention provides a signaling method of transmitting an extended type of preamble of a parameter of a corresponding signal through an AP1 symbol.

Thus, a receiver of a broadcast system according to an embodiment of the present invention may check whether a preamble is of an extended type, and a preamble format of the extended type through the S1 and S2 fields of the P1 symbol, and may determine whether decoding is performed on the AP1 symbol. In addition, the receiver of the broadcast system according to an embodiment of the present invention may perform the decoding on the AP1 symbol and may decode a transmitted signal according to transmission characteristics using an extended type of preamble transmitted through the AP1 symbol and a parameter of a corresponding signal.

That is, it may be confirmed that the receiver of the signal or basic profile of the conventional terrestrial broadcast system does not have to decode an AP1 symbol using information of the P1 symbol. Thus, in a signaling method according to the present invention, a receiver can be efficiently designed and system expandability can be ensured, thereby increasing signaling capacity.

In particular, when a broadcast system according to an embodiment of the present invention includes a Hybrid MIMO profile, an S3 field may have a signal of 3 bits and may indicate wave form used in the frame in the Hybrid MIMO profile, as shown in FIG. 15. An S4 field 1 may have a size of 3 bits and may indicate a size of FFT and Guard Interval of a currently transmitted Hybrid MIMO profile signal. Detailed field values and corresponding parameters have been described with reference to FIGS. 16 and 17. In addition, the configuration of the P1 symbol and AP1 symbol has been described with reference to FIGS. 9 and 10.

Then, the frame demapper 107200 according to an embodiment of the present invention parses the first and second frames from the modulated first and second broadcast signals (S193).

Then, the BICM decoder 107300 according to an embodiment of the present invention BICM decodes the data in the first and second frames to output PLP data (S194). In addition, the MIMO decoder 612230 according to an embodiment of the present invention may MIMO decode using the MIMO matrix described with reference to Expressions 1 and 4. The MIMO matrix may include a precoding matrix and a phase hopping matrix. The precoding matrix may be used as concept including a rotation matrix and a power imbalance matrix. The rotation matrix can express both input signals S1 and S2 provided through antenna 1 and antenna 2 even in a fully correlated channel, thereby increasing diversity. In addition, when the Euclidian distances of the input signals S1 and S2 are different, the power imbalance matrix may make the Euclidian distances equal. Accordingly, in the case in which the precoding matrix is applied, it is possible to reduce performance degradation when signals output from the transmission antennas have different powers and signals output through the transmission antennas have been modulated according to different modulation schemes. The available power imbalances are 0 dB, 3 dB and 6 dB. The above Table 2 summarizes values of such parameters determined through Expressions 4 and 5 when the power imbalance is 0 dB, 3 dB, and 6 dB. When the MIMO encoding is processed using a broadcast system of the Hybrid MIMO profile, parameters of Expression 7 and Table 3 may be used.

Then, the FEC decoder 612270 according to an embodiment of the present invention FEC decodes the MIMO decoded data to output Physical Layer Pipe, PLP, data (S196).

It will be apparent to those skilled in the art that various modifications and variations can be made in the present invention without departing from the spirit or scope of the invention. Thus, it is intended that the present invention cover the modifications and variations of this invention provided they come within the scope of the appended claims.

**Claims**

1. A method for transmitting broadcast signals, the method comprising;
   Bit Interleaved Coded Modulation, BICM, encoding Physical Layer Pipe, PLP data, wherein the BICM encoding further includes, allocating the PLP data into two input signals for QAM mapping and Multi Input Multi Output, MIMO, encoding the QAM mapped PLP data by using a MIMO matrix, wherein the MIMO matrix includes a pre-coding matrix and a phase hopping matrix;
   building first and second frames including the BICM encoded PLP data; and
   modulating and PAPR processing the first and second frames and inserting a P1 symbol and an AP1 symbol into each of the first and second frames to output first and second broadcast signals respectively,
   wherein the each of the first and second frames includes a preamble comprising the P1 symbol, the AP1 symbol and at least one P2 symbol,
   wherein the P1 symbol carries S1 and S2 fields and is located in the beginning of each of the first and second frames and the AP1 symbol carries S3 and S4 fields and is located right after the P1 symbol,
   wherein the S1 field indicates whether a type of the preamble is an extended type or not and the S2 filed indicates a preamble format for the extended type, wherein the preamble format is one of a preamble format of MIMO signal, a preamble format of Hybrid SISO signal, a preamble format of Hybrid MISO signal and a preamble format of Hybrid MIMO signal, wherein at least one of the Hybrid SISO signal, Hybrid MISO signal and Hybrid MIMO signal is for a terrestrial broadcast service or a satellite broadcast service,
   wherein the S3 field indicates a type of a waveform used for modulating the Hybrid MIMO signal and the S4 field indicates a corresponding fast Fourier transform, FFT, size and guard interval for the waveform.

2. The method of claim 1, wherein the waveform is one of an Orthogonal Frequency Division Multiplex, OFDM, waveform or a Single Carrier, SC,-OFDM, waveform.

3. The method of claim 1, wherein the MIMO matrix includes MIMO parameters for 0dB, 3dB and 6dB of a power imbalance between the first and second broadcast signals.

4. The method of claim 1, wherein the P1 symbol includes a main part, a prefix and a postfix and the AP1 symbol includes the additional main part, an additional prefix and an additional postfix,
   wherein the additional prefix carries a frequency shifted version of a part of the additional main part while the additional postfix conveys a frequency shifted version of the other part of the additional main part, wherein length difference between the prefix and postfix is different from length difference between the additional prefix and the additional postfix.

5. The method of claim 1, wherein the S2 filed further indicates whether preambles in the broadcast signals are all of the same type or not.

6. A method for receiving broadcast signals, the method comprising;
receiving first and second broadcast signals including first and second frames respectively, wherein each of the first and second frames includes a preamble comprising a P1 symbol, an AP1 symbol and at least one P2 symbol;
detecting the P1 symbol in the received first and second broadcast signals, wherein the P1 symbol carries S1 and S2 fields and is located in the beginning of the each of the first and second frames, wherein the S1 field indicates whether a type of the preamble is an extended type or not and the S2 filed indicates preamble formats for the extended type, wherein the preamble formats are a preamble format of MIMO signal, a preamble format of Hybrid SISO signal, a preamble format of Hybrid MISO signal and a preamble format of Hybrid MIMO signal, wherein at least one of the Hybrid SISO signal, Hybrid MISO signal and Hybrid MIMO signal is for a terrestrial service or a satellite broadcast service;
detecting the AP1 symbol in the received first and second broadcast signals for demodulating the received first and second broadcast signals, wherein the AP1 symbol carries S3 and S4 fields and is located right after the P1 symbol, wherein the S3 field indicates a type of a waveform for demodulating the first and second broadcast signals and the S4 field indicates a corresponding fast Fourier transform, FFT, size and guard interval for the waveform;
demodulating the first and second broadcast signals;
parsing the first and second frames from the demodulated first and second broadcast signals; and
BICM decoding data in the first and second frames to output Physical Layer Pipe, PLP, data, wherein the BICM decoding further includes:

Multi Input Multi Output, MIMO decoding the data in the first and second frames using a MIMO matrix and QAM de-mapping the MIMO decoded data to output the PLP data, wherein the MIMO matrix includes a pre-coding matrix and a phase hopping matrix.

7. The method of claim 6, wherein the waveform is one of an Orthogonal Frequency Division Multiplex, OFDM, waveform or a Single Carrier, SC,-OFDM, waveform.

8. The method of claim 7, wherein the received first and second broadcast signals are demodulated by OFDM method or SC-OFDM method according to the S3 field.

9. The method of claim 6, wherein the MIMO matrix includes MIMO parameters for 0 dB, 3dB and 6dB of a power imbalance between the first and second broadcast signals.

10. The method of claim 6, wherein the P1 symbol includes a main part, a prefix and a postfix and the AP1 symbol includes the additional main part, an additional prefix and an additional postfix,
wherein the additional prefix carries a frequency shifted version of a part of the additional main part while the additional postfix conveys a frequency shifted version of the other part of the additional main part, wherein length difference between the prefix and postfix is different from length difference between the additional prefix and the additional postfix.

11. An apparatus for transmitting broadcast signals, the apparatus comprising;
means (101300) for BICM encoding Physical Layer Pipe, PLP, data, wherein the means (101300) for BICM encoding further allocating the PLP data into two input signals for QAM mapping and Multi Input Multi Output, MIMO, encoding the QAM mapped PLP data using a MIMO matrix, wherein the MIMO matrix includes a pre-coding matrix and a phase hopping matrix;
means (101400) for building first and second frames including the BICM encoded PLP data; and
means (101500) for modulating and PAPR processing the first and second frames and inserting a P1 symbol and an AP1 symbol into each of the first and second frames to output first and second broadcast signals respectively, wherein the each of the first and second frames includes a preamble comprising the P1 symbol, the AP1 symbol and at least one P2 symbol,
wherein the P1 symbol carries S1 and S2 fields and is located in the beginning of each of the first and second frames and the AP1 symbol carries S3 and S4 fields and is located right after the P1 symbol,
wherein the S1 field indicates whether a type of the preamble is an extended type or not and the S2 filed indicates a preamble format for the extended type, wherein the preamble format is one of a preamble format of MIMO signal, a preamble format of Hybrid SISO signal, a preamble format of Hybrid MISO signal and a preamble format of Hybrid MIMO signal, wherein at least one of the Hybrid SISO signal, Hybrid MISO signal and Hybrid MIMO signal is for a terrestrial service or a satellite broadcast service,
wherein the S3 field indicates a type of a waveform for modulating the first and second broadcast signals and the S4 field indicates a corresponding fast Fourier transform, FFT, size and guard interval for the waveform.

12. The apparatus of claim 11, wherein the waveform is one of an Orthogonal Frequency Division Multiplex, OFDM, waveform or a Single Carrier-OFDM, SC-OFDM, waveform.

13. The apparatus of claim 11, wherein the MIMO matrix includes MIMO parameters for 0 dB, 3dB and 6dB of a power imbalance between the first and second broadcast signals.

14. The apparatus of claim 11, wherein the P1 symbol includes a main part, a prefix and a postfix and the AP1 symbol includes the additional main part, an additional prefix and an additional postfix,
wherein the additional prefix carries a frequency shifted version of a part of the additional main part while the additional postfix conveys a frequency shifted version of the other part of the additional main part, wherein length difference between the prefix and postfix is different from length difference between the additional prefix and the additional postfix.

15. The apparatus of claim 11, wherein the S2 filed further indicates whether preambles in the broadcast signals are all of the same type or not.

16. An apparatus for receiving broadcast signals, the apparatus comprising;
means (107100) for receiving first and second broadcast signals including first and second frames respectively, wherein each of the first and second frames includes a preamble comprising the P1 symbol, the AP1 symbol and at least one P2 symbol,
detecting the P1 symbol in the received first and second broadcast signals, wherein the P1 symbol carries S1 and S2 fields and is located in the beginning of the each of the first and second frames, wherein the S1 field indicates whether a type of the preamble is an extended type or not and the S2 filed indicates a preamble format for the extended type, wherein the preamble format is one of a preamble format of MIMO signal, a preamble format of Hybrid SISO signal, a preamble format of Hybrid MISO signal and a preamble format of Hybrid MIMO signalwherein at least one of the Hybrid SISO signal, Hybrid MISO signal and Hybrid MIMO signal is for a terrestrial service or a satellite broadcast service,
detecting the AP1 symbol in the received first and second broadcast signals using the detected P1 symbol for demodulating the received first and second broadcast signals, wherein the AP1 symbol carries S3 and S4 fields and is located right after the P1 symbol, wherein the S3 field indicates a type of a waveform for demodulating the first and second broadcast signals and the S4 field indicates a corresponding fast Fourier transform, FFT, size and guard interval for the waveform and
demodulating the first and second broadcast signals;
means (107200) for parsing the first and second frames from the demodulated first and second broadcast signals; and
means (107300) for BICM decoding data in the first and second frames to output Physical Layer Pipe, PLP, data, wherein the means (107300) for BICM decoding further
Multi Input Multi Output, MIMO decoding the data in the first and second frames using a MIMO matrix and QAM de-mapping the MIMO decoded data to output the PLP data, wherein the MIMO matrix includes a pre-coding matrix and a phase hopping matrix.

17. The apparatus of claim 16, wherein the waveform is one of an Orthogonal Frequency Division Multiplex, OFDM, waveform or a Single Carrier-OFDM, SC-OFDM, waveform.

18. The apparatus of claim 17, wherein the received first and second broadcast signals are demodulated by OFDM method or SC-OFDM method according to the S3 field.

19. The apparatus of claim 16, wherein the MIMO matrix includes MIMO parameters for 0 dB, 3dB and 6dB of a power imbalance between the first and second broadcast signals.

20. The apparatus of claim 16, wherein the P1 symbol includes a main part, a prefix and a postfix and the AP1 symbol includes the additional main part, an additional prefix and an additional postfix,
wherein the additional prefix carries a frequency shifted version of a part of the additional main part while the additional postfix conveys a frequency shifted version of the other part of the additional main part, wherein length difference between the prefix and postfix is different from length difference between the additional prefix and the additional postfix.

**Patentansprüche**

1. Verfahren zur Übertragung von Rundfunksignalen, wobei das Verfahren umfasst:

   Bit Interleaved Coded Modulation (BICM) zur Codierung von Physical Layer Pipe (PLP)-Daten, wobei die BICM-Codierung weiterhin die Zuordnung der PLP-Daten zu zwei Eingangssignalen für QAM-Mapping und Multi Input Multi Output (MIMO) umfasst, womit die PLP-Daten nach dem QAM-Mapping mit Hilfe einer MIMO-Matrix codiert werden, wobei die MIMO-Matrix eine Vorcodierungsmatrix und eine Phasensprungmatrix umfasst;
   Aufbau eines ersten und zweiten Rahmens, welche die BICM-codierten PLP-Daten umfassen; und
   Modulation und PAPR-Verarbeitung des ersten und zweiten Rahmens und Einfügen eines P1-Symbols und eines AP1-Symbols in den ersten und den zweiten Rahmen, um ein erstes beziehungsweise zweites Rundfunksignal auszugeben,
   wobei der erste und zweite Rahmen jeweils eine Präambel enthalten, die das P1-Symbol, das AP1-Symbol und mindestens ein P2-Symbol umfasst,
   wobei das P1-Symbol ein S1- und ein S2-Feld trägt und sich jeweils am Anfang des ersten und zweiten Rahmens befindet und das AP1-Symbol ein S3- und ein S4-Feld trägt und sich unmittelbar nach dem P1-Symbol befindet;
   wobei das S1-Feld angibt, ob ein Präambeltyp ein erweiterter Typ ist oder nicht, und das S2-Feld ein Präambelformat für den erweiterten Typ anzeigt, wobei das Präambelformat ein Präambelformat des MIMO-Signals, ein Präambelformat des Hybrid-SISO-Signals, ein Präambelformat des Hybrid-MISO-Signals oder ein Präambelformat des Hybrid-MIMO-Signals ist, wobei das Hybrid-SISO-Signal, das Hybrid-MISO-Signal und/oder das Hybrid-MIMO-Signal für terrestrischen Rundfunk oder Satellitenfunk dient/dienen,
   wobei das S3-Feld einen Wellenformtyp anzeigt, der für die Modulation des Hybrid-MIMO-Signals genutzt wird, und das S4-Feld ein entsprechendes Größen- und Schutzintervall für die Wellenform in Form einer schnellen Fouriertransformation (FFT) anzeigt.

2. Verfahren nach Anspruch 1, wobei die Wellenform eine orthogonale Frequenzteilungsmultiplex-(OFDM-)-Wellenform oder eine Einkanal-(SC)-OFDM-Wellenform ist.

3. Verfahren nach Anspruch 1, wobei die MIMO-Matrix MIMO-Parameter für ein Leistungsungleichgewicht von 0 dB, 3 dB und 6 dB zwischen dem ersten und zweiten Rundfunksignal umfasst.

4. Verfahren nach Anspruch 1, wobei das P1-Symbol einen Hauptteil, ein Präfix und ein Postfix umfasst und das AP1-Symbol den zusätzlichen Hauptteil, ein zusätzliches Präfix und ein zusätzliches Postfix umfasst, wobei das zusätzliche Präfix eine frequenzverschobene Version eines Teils des zusätzlichen Hauptteils trägt, während das zusätzliche Postfix eine frequenzverschobene Version des anderen Teils des zusätzlichen Hauptteils überträgt, wobei der Längenunterschied zwischen dem Präfix und dem Postfix sich vom Längenunterschied zwischen dem zusätzlichen Präfix und dem zusätzlichen Postfix unterscheidet.

5. Verfahren nach Anspruch 1, wobei das S2-Feld weiterhin angibt, ob Präambeln in den Rundfunksignalen alle vom selben Typ sind oder nicht.

6. Verfahren zum Empfang von Rundfunksignalen, wobei das Verfahren umfasst:

   Empfangen des ersten und zweiten Rundfunksignals einschließlich des ersten beziehungsweise zweiten Rahmens, wobei der erste und der zweite Rahmen eine Präambel umfassen, die ein P1-Symbol, ein AP1-Symbol und mindestens ein P2-Symbol umfasst;
   Erkennen des P1-Symbols im empfangenen ersten und zweiten Rundfunksignal, wobei das P1-Symbol das S1- und das S2-Feld trägt und sich jeweils am Anfang des ersten und zweiten Rahmens befindet, wobei das S1-Feld angibt, ob ein Präambeltyp ein erweiterter Typ ist oder nicht, und das S2-Feld Präambelformate für den erweiterten Typ anzeigt, wobei die Präambelformate ein Präambelformat des MIMO-Signals, ein Präambelformat des Hybrid-SISO-Signals, ein Präambelformat des Hybrid-MISO-Signals und ein Präambelformat des Hybrid-MIMO-Signals sind, wobei das Hybrid-SISO-Signal, das Hybrid-MISO-Signal und/oder das Hybrid-MIMO-Signal für terrestrischen Rundfunk oder Satellitenfunk dient/dienen,
   Erkennen des AP1-Symbols im empfangenen ersten und zweiten Rundfunksignal zur Demodulation des empfangenen ersten und zweiten Runkfunksignals, wobei des AP1-Symbol das S3- und das S4-Feld trägt und sich unmittelbar nach dem P1-Symbol befindet, wobei das S3-Feld einen Wellenformtyp für die Demodulation des ersten und zweiten Rundfunksignals anzeigt und das S4-Feld ein entsprechendes Größen- und Schutzintervall für die Wellenform in Form einer schnellen Fouriertransformation (FFT) anzeigt;

Demodulation des ersten und zweiten Rundfunksignals;

Parsen des ersten und zweiten Rahmens aus dem demodulierten ersten und zweiten Rundfunksignal; und BICM-Decodierung der Daten im ersten und zweiten Rahmen zur Ausgabe von Physical Layer Pipe (PLP)-Daten wobei die BICM-Decodierung weiterhin umfasst:

Multi Input Multi Output (MIMO)-Decodierung der Daten im ersten und zweiten Rahmen mit Hilfe einer MIMO-Matrix und QAM-Demapping der MIMO-decodierten Daten zur Ausgabe der PLP-Daten, wobei die MIMO-Matrix eine Vorcodierungsmatrix und eine Phasensprungmatrix umfasst.

7. Verfahren nach Anspruch 6, wobei die Wellenform eine orthogonale Frequenzteilungsmultiplex-(OFDM-)-Wellenform oder eine Einkanal-(SC)-OFDM-Wellenform ist.

8. Verfahren nach Anspruch 7, wobei das empfangene erste und zweite Rundfunksignal mit Hilfe des OFDM-Verfahrens oder des SC-OFDM-Verfahrens gemäß dem S3-Feld demoduliert wird.

9. Verfahren nach Anspruch 6, wobei die MIMO-Matrix MIMO-Parameter für ein Leistungsungleichgewicht von 0 dB, 3 dB und 6 dB zwischen dem ersten und zweiten Rundfunksignal umfasst.

10. Verfahren nach Anspruch 6, wobei des P1-Symbol einen Hauptteil, ein Präfix und ein Postfix umfasst und das AP1-Symbol den zusätzlichen Hauptteil, ein zusätzliches Präfix und ein zusätzliches Postfix umfasst, wobei das zusätzliche Präfix eine frequenzverschobene Version eines Teils des zusätzlichen Hauptteils trägt, während das zusätzliche Postfix eine frequenzverschobene Version des anderen Teils des zusätzlichen Hauptteils überträgt, wobei der Längenunterschied zwischen dem Präfix und dem Postfix sich vom Längenunterschied zwischen dem zusätzlichen Präfix und dem zusätzlichen Postfix unterscheidet.

11. Gerät zur Übertragung von Rundfunksignalen, wobei das Gerät umfasst:

Mittel (101300) zur BICM-Codierung von Physical Layer Pipe (PLP)-Daten, wobei die Mittel (101300) zur BICM-Codierung weiterhin die PLP-Daten zu zwei Eingangssignalen für QAM-Mapping und Multi Input Multi Output (MIMO) zuordnen, womit die PLP-Daten nach dem QAM-Mapping mit Hilfe einer MIMO-Matrix codiert werden, wobei die MIMO-Matrix eine Vorcodierungsmatrix und eine Phasensprungmatrix umfasst;

Mittel (101400) zum Aufbau eines ersten und zweiten Rahmens, welche die BICM-codierten PLP-Daten umfassen; und

Mittel (101500) zur Modulation und PAPR-Verarbeitung des ersten und zweiten Rahmens und zum Einfügen eines P1-Symbols und eines AP1-Symbols in den ersten und den zweiten Rahmen, um ein erstes beziehungsweise zweites Rundfunksignal auszugeben,

wobei der erste und zweite Rahmen jeweils eine Präambel enthalten, die das P1-Symbol, das AP1-Symbol und mindestens ein P2-Symbol umfasst,

wobei das P1-Symbol ein S1- und ein S2-Feld trägt und sich jeweils am Anfang des ersten und zweiten Rahmens befindet und das AP1-Symbol ein S3- und ein S4-Feld trägt und sich unmittelbar nach dem P1-Symbol befindet;

wobei das S1-Feld angibt, ob ein Präambeltyp ein erweiterter Typ ist oder nicht, und das S2-Feld ein Präambelformat für den erweiterten Typ anzeigt, wobei das Präambelformat ein Präambelformat des MIMO-Signals, ein Präambelformat des Hybrid-SISO-Signals, ein Präambelformat des Hybrid-MISO-Signals oder ein Präambelformat des Hybrid-MIMO-Signals ist, wobei das Hybrid-SISO-Signal, das Hybrid-MISO-Signal und/oder das Hybrid-MIMO-Signal für terrestrischen Rundfunk oder Satellitenfunk dient/dienen,

wobei das S3-Feld einen Wellenformtyp für die Modulation des ersten und zweiten Rundfunksignals anzeigt und das S4-Feld ein entsprechendes Größen- und Schutzintervall für die Wellenform in Form einer schnellen Fouriertransformation (FFT) anzeigt.

12. Gerät nach Anspruch 11, wobei die Wellenform eine orthogonale Frequenzteilungsmultiplex-(OFDM-)-Wellenform oder eine Einkanal-(SC)-OFDM-Wellenform ist.

13. Gerät nach Anspruch 11, wobei die MIMO-Matrix MIMO-Parameter für ein Leistungsungleichgewicht von 0 dB, 3 dB und 6 dB zwischen dem ersten und zweiten Rundfunksignal umfasst.

**14.** Gerät nach Anspruch 11, wobei des P1-Symbol einen Hauptteil, ein Präfix und ein Postfix umfasst und das AP1-Symbol den zusätzlichen Hauptteil, ein zusätzliches Präfix und ein zusätzliches Postfix umfasst, wobei das zusätzliche Präfix eine frequenzverschobene Version eines Teils des zusätzlichen Hauptteils trägt, während das zusätzliche Postfix eine frequenzverschobene Version des anderen Teils des zusätzlichen Hauptteils überträgt, wobei der Längenunterschied zwischen dem Präfix und dem Postfix sich vom Längenunterschied zwischen dem zusätzlichen Präfix und dem zusätzlichen Postfix unterscheidet.

**15.** Gerät nach Anspruch 11, wobei das S2-Feld weiterhin angibt, ob Präambeln in den Rundfunksignalen alle vom selben Typ sind oder nicht.

**16.** Gerät zum Empfang von Rundfunksignalen, wobei das Gerät umfasst:

Mittel (107100) für das Empfangen des ersten und zweiten Rundfunksignals einschließlich des ersten beziehungsweise zweiten Rahmens, wobei der erste und der zweite Rahmen eine Präambel umfassen, die das P1-Symbol, das AP1-Symbol und mindestens ein P2-Symbol umfasst;

Erkennen des P1-Symbols im empfangenen ersten und zweiten Rundfunksignal, wobei das P1-Symbol das S1- und das S2-Feld trägt und sich jeweils am Anfang des ersten und zweiten Rahmens befindet, wobei das S1-Feld angibt, ob ein Präambeltyp ein erweiterter Typ ist oder nicht, und das S2-Feld ein Präambelformat für den erweiterten Typ anzeigt, wobei das Präambelformat ein Präambelformat des MIMO-Signals, ein Präambelformat des Hybrid-SISO-Signals, ein Präambelformat des Hybrid-MISO-Signals oder ein Präambelformat des Hybrid-MIMO-Signals ist, wobei das Hybrid-SISO-Signal, das Hybrid-MISO-Signal und/oder das Hybrid-MIMO-Signal für terrestrischen Rundfunk oder Satellitenfunk dient/dienen,

Erkennen des AP1-Symbols im empfangenen ersten und zweiten Rundfunksignal, wobei das erkannte P1-Symbol zur Demodulation des empfangenen ersten und zweiten Runkfunksignals verwendet wird, wobei das AP1-Symbol das S3- und das S4-Feld trägt und sich unmittelbar nach dem P1-Symbol befindet, wobei das S3-Feld einen Wellenformtyp für die Demodulation des ersten und zweiten Rundfunksignals anzeigt und das S4-Feld ein entsprechendes Größen- und Schutzintervall für die Wellenform in Form einer schnellen Fouriertransformation (FFT) anzeigt;

Demodulation des ersten und zweiten Rundfunksignals;

Mittel (107200) zum Parsen des ersten und zweiten Rahmens aus dem demodulierten ersten und zweiten Rundfunksignal; und

Mittel (107300) zur BICM-Decodierung der Daten im ersten und zweiten Rahmen zur Ausgabe von Physical Layer Pipe (PLP)-Daten, wobei die Mittel (107300) zur BICM-Decodierung weiterhin umfassen:

Multi Input Multi Output (MIMO)-Decodierung der Daten im ersten und zweiten Rahmen mit Hilfe einer MIMO-Matrix und QAM-Demapping der MIMO-decodierten Daten zur Ausgabe der PLP-Daten, wobei die MIMO-Matrix eine Vorcodierungsmatrix und eine Phasensprungmatrix umfasst.

**17.** Gerät nach Anspruch 16, wobei die Wellenform eine orthogonale Frequenzteilungsmultiplex-(OFDM-)-Wellenform oder eine Einkanal-(SC)-OFDM-Wellenform ist.

**18.** Gerät nach Anspruch 17, wobei das empfangene erste und zweite Rundfunksignal mit Hilfe des OFDM-Verfahrens oder des SC-OFDM-Verfahrens gemäß dem S3-Feld demoduliert werden.

**19.** Gerät nach Anspruch 16, wobei die MIMO-Matrix MIMO-Parameter für ein Leistungsungleichgewicht von 0 dB, 3 dB und 6 dB zwischen dem ersten und zweiten Rundfunksignal umfasst.

**20.** Gerät nach Anspruch 16, wobei das P1-Symbol einen Hauptteil, ein Präfix und ein Postfix umfasst und das AP1-Symbol den zusätzlichen Hauptteil, ein zusätzliches Präfix und ein zusätzliches Postfix umfasst, wobei das zusätzliche Präfix eine frequenzverschobene Version eines Teils des zusätzlichen Hauptteils trägt, während das zusätzliche Postfix eine frequenzverschobene Version des anderen Teils des zusätzlichen Hauptteils überträgt, wobei der Längenunterschied zwischen dem Präfix und dem Postfix sich vom Längenunterschied zwischen dem zusätzlichen Präfix und dem zusätzlichen Postfix unterscheidet.

**Revendications**

**1.** Procédé de transmission de signaux de radiodiffusion, le procédé comprenant :

l'encodage par modulation codée par bit entrelacé, BICM, de données de canal de couche physique, PLP, dans lequel l'encodage par BICM inclut en outre l'allocation des données PLP en deux signaux d'entrée pour un mappage par QAM et l'encodage à entrées multiples sorties multiples, MIMO, des données PLP mappées par QAM en utilisant une matrice MIMO, dans lequel la matrice MIMO inclut une matrice de précodage et une matrice de saut de phase ;

la construction de première et seconde trames incluant les données PLP encodées par BICM ; et

la modulation et le traitement par PAPR des première et seconde trames et l'insertion d'un symbole P1 et d'un symbole AP1 dans chacune des première et seconde trames pour produire en sortie des premier et second signaux de radiodiffusion respectivement,

dans lequel chacune des première et seconde trames inclut un préambule comprenant le symbole P1, le symbole AP1 et au moins un symbole P2,

dans lequel le symbole P1 porte des champs S1 et S2 et est situé au début de chacune des première et seconde trames et le symbole AP1 porte des champs S3 et S4 et est situé juste après le symbole P1,

dans lequel le champ S1 indique si un type du préambule est un type étendu ou non et le champ S2 indique un format de préambule pour le type étendu, dans lequel le format de préambule est l'un d'un format de préambule de signal MIMO, d'un format de préambule de signal SISO hybride, d'un format de préambule de signal MISO hybride et d'un format de préambule de signal MIMO hybride, dans lequel au moins l'un du signal SISO hybride, du signal MISO hybride et du signal MIMO hybride est destiné à un service de radiodiffusion terrestre ou à un service de radiodiffusion par satellite,

dans lequel le champ S3 indique un type d'une forme d'onde utilisé pour moduler le signal MIMO hybride et le champ S4 indique une transformée de Fourier rapide, FFT, correspondante, une taille et un intervalle de garde pour la forme d'onde.

2. Procédé selon la revendication 1, dans lequel la forme d'onde est l'une d'une forme d'onde d'un multiplexage par répartition orthogonale de la fréquence, OFDM, ou d'une forme d'onde OFDM à porteuse unique, SC.

3. Procédé selon la revendication 1, dans lequel la matrice MIMO inclut des paramètres MIMO pour 0 dB, 3 dB et 6 dB d'un déséquilibre de puissance entre les premier et second signaux de radiodiffusion.

4. Procédé selon la revendication 1, dans lequel le symbole P1 inclut une partie principale, un préfixe et un postfixe et le symbole AP1 inclut la partie principale supplémentaire, un préfixe supplémentaire et un postfixe supplémentaire, dans lequel le préfixe supplémentaire porte une version déplacée en fréquence d'une partie de la partie principale supplémentaire tandis que le postfixe supplémentaire achemine une version déplacée en fréquence de l'autre partie de la partie principale supplémentaire, dans lequel une différence de longueur entre le préfixe et le postfixe est différente d'une différence de longueur entre le préfixe supplémentaire et le postfixe supplémentaire.

5. Procédé selon la revendication 1, dans lequel le champ S2 indique en outre si des préambules dans les signaux de radiodiffusion sont tous du même type ou non.

6. Procédé de réception de signaux de radiodiffusion, le procédé comprenant :

la réception de premier et second signaux de radiodiffusion incluant des première et seconde trames respectivement, dans lequel chacune des première et seconde trames inclut un préambule comprenant un symbole P1, un symbole AP1 et au moins un symbole P2 ;

la détection du symbole P1 dans les premier et second signaux de radiodiffusion reçus, dans lequel le symbole P1 porte des champs S1 et S2 et est situé au début de chacune des première et seconde trames, dans lequel le champ S1 indique si un type du préambule est un type étendu ou non et le champ S2 indique des formats de préambule pour le type étendu, dans lequel les formats de préambule sont un format de préambule de signal MIMO, un format de préambule de signal SISO hybride, un format de préambule de signal MISO hybride et un format de préambule de signal MIMO hybride, dans lequel au moins l'un du signal SISO hybride, du signal MISO hybride et du signal MIMO hybride est destiné à un service terrestre ou à un service de radiodiffusion par satellite ;

la détection du symbole AP1 dans les premier et second signaux de radiodiffusion reçus pour démoduler les premier et second signaux de radiodiffusion reçus, dans lequel le symbole AP1 porte des champs S3 et S4 et est situé juste après le symbole P1, dans lequel le champ S3 indique un type d'une forme d'onde pour démoduler les premier et second signaux de radiodiffusion et le champ S4 indique une transformée de Fourier rapide, FFT, correspondante, une taille et un intervalle de garde pour la forme d'onde ;

la démodulation des premier et second signaux de radiodiffusion ;

l'analyse syntaxique des première et seconde trames provenant des premier et second signaux de radiodiffusion démodulés ; et

le décodage par BICM de données dans les première et seconde trames pour produire en sortie des données de canal de couche physique, PLP, dans lequel le décodage par BICM inclut en outre :

le décodage à entrées multiples sorties multiples, MIMO, des données dans les première et seconde trames à l'aide d'une matrice MIMO et le démappage par QAM des données décodées par MIMO pour produire en sortie les données PLP, dans lequel la matrice MIMO inclut une matrice de précodage et une matrice de saut de phase.

7. Procédé selon la revendication 6, dans lequel la forme d'onde est l'une d'une forme d'onde de multiplexage par répartition orthogonale de la fréquence, OFDM, ou d'une forme d'onde OFDM à porteuse unique, SC.

8. Procédé selon la revendication 7, dans lequel les premier et second signaux de radiodiffusion reçus sont démodulés par le procédé OFDM ou le procédé SC-OFDM selon le champ S3.

9. Procédé selon la revendication 6, dans lequel la matrice MIMO inclut des paramètres MIMO pour 0 dB, 3 dB et 6 dB d'un déséquilibre de puissance entre les premier et second signaux de radiodiffusion.

10. Procédé selon la revendication 6, dans lequel le symbole P1 inclut une partie principale, un préfixe et un postfixe et le symbole AP1 inclut la partie principale supplémentaire, un préfixe supplémentaire et un postfixe supplémentaire, dans lequel le préfixe supplémentaire porte une version déplacée en fréquence d'une partie de la partie principale supplémentaire tandis que le postfixe supplémentaire achemine une version déplacée en fréquence de l'autre partie de la partie principale supplémentaire, dans lequel une différence de longueur entre le préfixe et le postfixe est différente d'une différence de longueur entre le préfixe supplémentaire et le postfixe supplémentaire.

11. Appareil de transmission de signaux de radiodiffusion, l'appareil comprenant :

un moyen (101300) pour encoder par BICM des données de canal de couche physique, PLP, dans lequel le moyen (101300) pour encoder par BICM alloue en outre les données PLP en deux signaux d'entrée pour un mappage par QAM et un encodage à entrées multiples et sorties multiples, MIMO, des données PLP mappées par QAM à l'aide d'une matrice MIMO, dans lequel la matrice MIMO inclut une matrice de précodage et une matrice de saut de phase ;

un moyen (101400) pour construire des première et seconde trames incluant les données PLP encodées par BICM ; et

un moyen (101500) pour moduler et traiter par PAPR les première et seconde trames et insérer un symbole P1 et un symbole AP1 dans chacune des première et seconde trames pour produire en sortie des premier et second signaux de radiodiffusion respectivement,

dans lequel chacune des première et seconde trames inclut un préambule comprenant le symbole P1, le symbole AP1 et au moins un symbole P2,

dans lequel le symbole P1 porte des champs S1 et S2 et est situé au début de chacune des première et seconde trames et le symbole AP1 porte des champs S3 et S4 et est situé juste après le symbole P1,

dans lequel le champ S1 indique si un type du préambule est un type étendu ou non et le champ S2 indique un format de préambule pour le type étendu, dans lequel le format de préambule est l'un d'un format de préambule de signal MIMO, un format de préambule de signal SISO hybride, un format de préambule de signal MISO hybride et un format de préambule de signal MIMO hybride, dans lequel au moins l'un du signal SISO hybride, du signal MISO hybride et du signal MIMO hybride est destiné à un service terrestre ou un service de radiodiffusion par satellite,

dans lequel le champ S3 indique un type d'une forme d'onde pour moduler les premier et second signaux de radiodiffusion et le champ S4 indique une transformée de Fourier rapide, FFT, correspondante, une taille et un intervalle de garde pour la forme d'onde.

12. Appareil selon la revendication 11, dans lequel la forme d'onde est l'une d'une forme d'onde de multiplexage par répartition orthogonale de la fréquence, OFDM, ou d'une forme d'onde OFDM à porteuse unique, SC-OFDM.

13. Appareil selon la revendication 11, dans lequel la matrice MIMO inclut des paramètres MIMO pour 0 dB, 3 dB et 6 dB d'un déséquilibre de puissance entre les premier et second signaux de radiodiffusion.

**14.** Appareil selon la revendication 11, dans lequel le symbole P1 inclut une partie principale, un préfixe et un postfixe et le symbole AP1 inclut la partie principale supplémentaire, un préfixe supplémentaire et un postfixe supplémentaire, dans lequel le préfixe supplémentaire porte une version déplacée en fréquence d'une partie de la partie principale supplémentaire tandis que le postfixe supplémentaire achemine une version déplacée en fréquence de l'autre partie de la partie principale supplémentaire, dans lequel une différence de longueur entre le préfixe et le postfixe est différente d'une différence de longueur entre le préfixe supplémentaire et le postfixe supplémentaire.

**15.** Appareil selon la revendication 11, dans lequel le champ S2 indique en outre si des préambules dans les signaux de radiodiffusion sont tous du même type ou non.

**16.** Appareil de réception de signaux de radiodiffusion, l'appareil comprenant :

un moyen (107100) pour recevoir des premier et second signaux de radiodiffusion incluant des première et seconde trames respectivement, dans lequel chacune des première et seconde trames inclut un préambule comprenant le symbole P1, le symbole AP1 et au moins un symbole P2,
la détection du symbole P1 dans les premier et second signaux de radiodiffusion reçus, dans lequel le symbole P1 porte des champs S1 et S2 et est situé au début de chacune des première et seconde trames, dans lequel le champ S1 indique si un type du préambule est un type étendu ou non et le champ S2 indique un format de préambule pour le type étendu, dans lequel le format de préambule est l'un d'un format de préambule de signal MIMO, d'un format de préambule de signal SISO hybride, d'un format de préambule de signal MISO hybride et d'un format de préambule de signal MIMO hybride, dans lequel au moins l'un du signal SISO hybride, du signal MISO hybride et du signal MIMO hybride est destiné à un service terrestre ou à un service de radiodiffusion par satellite,
la détection du symbole AP1 dans les premier et second signaux de radiodiffusion reçus à l'aide du symbole P1 détecté pour démoduler les premier et second signaux de radiodiffusion reçus, dans lequel le symbole AP1 porte des champs S3 et S4 et est situé juste après le symbole P1, dans lequel le champ S3 indique un type d'une forme d'onde pour démoduler les premier et second signaux de radiodiffusion et le champ S4 indique une transformée de Fourier rapide, FFT, correspondante, une taille et un intervalle de garde pour la forme d'onde et
la démodulation des premier et second signaux de radiodiffusion ;
un moyen (107200) pour analyser syntaxiquement les première et seconde trames provenant des premier et second signaux de radiodiffusion démodulés ; et
un moyen (107300) pour décoder par BICM des données dans les première et seconde trames pour produire en sortie des données de canal de couche physique, PLP, dans lequel le moyen (107300) pour décoder par BICM comprend en outre le décodage à entrées multiples sorties multiples, MIMO, des données dans les première et seconde trames à l'aide d'une matrice MIMO et le démappage par QAM des données décodées par MIMO pour produire en sortie des données PLP, dans lequel la matrice MIMO inclut une matrice de précodage et une matrice de saut de phase.

**17.** Appareil selon la revendication 16, dans lequel la forme d'onde est l'une d'une forme d'onde de multiplexage par répartition orthogonale de la fréquence, OFDM, ou d'une forme d'onde OFDM à porteuse unique, SC-OFDM.

**18.** Appareil selon la revendication 17, dans lequel les premier et second signaux de radiodiffusion reçus sont démodulés par un procédé OFDM ou un procédé SC-OFDM selon le champ S3.

**19.** Appareil selon la revendication 16, dans lequel la matrice MIMO inclut des paramètres MIMO pour 0 dB, 3 dB et 6 dB d'un déséquilibre de puissance entre les premier et second signaux de radiodiffusion.

**20.** Appareil selon la revendication 16, dans lequel le symbole P1 inclut une partie principale, un préfixe et un postfixe et le symbole AP1 inclut la partie principale supplémentaire, un préfixe supplémentaire et un postfixe supplémentaire, dans lequel le préfixe supplémentaire porte une version déplacée en fréquence d'une partie de la partie principale supplémentaire tandis que le postfixe supplémentaire achemine une version déplacée en fréquence de l'autre partie de la partie principale supplémentaire, dans lequel une différence de longueur entre le préfixe et le postfixe est différente d'une différence de longueur entre le préfixe supplémentaire et le postfixe supplémentaire.

FIG. 1

TS/GS input

101100 — Input-preprocess

101200 — Input-processing module

101300 — BICM encoder

101400 — Frame builder

101500 — OFDM generator

Antennas (Tx)

# FIG. 2

PLPm
(MIMO) → FEC encoder → Bit interleaver → Demulti-plexer → A first constellation mapper / A second constellation mapper → MIMO encoder → A first cell interleaver / A second interleaver → A first time interleaver / A second time interleaver → STx_m / STx_m+1

604210   604220   604230   604240-1   604250   604260-1   604270-1

604240-2   604260-2   604270-2

# FIG. 3

107100    107200    107300    107400

Antennas
(Rx)

| OFDM Demodulator | Frame parser | BICM decoder | Output processor |

TS/GS output

# FIG. 4

EP 2 629 444 B1

```
          612210-1        612220-1        612230        612240-1        612250        612260        612270

SRx_m    ┌──────────┐   ┌──────────┐   ┌──────────┐   ┌──────────────┐   ┌──────────┐   ┌──────────────┐   ┌──────────────┐   PLPm
────────▶│A first time│──▶│A first cell│─▶│          │─▶│  A first      │─▶│          │─▶│     Bit      │──▶│ FEC decoder  │──▶
         │de-interleaver│ │de-interleaver│ │  MIMO    │  │ constellation │  │Multiplexer│  │de-interleaver│  │              │  (MIMO)
SRx_m+1  ├──────────┤   ├──────────┤   │  decoder  │   │ de-mapper     │   │          │   └──────────────┘   └──────────────┘
────────▶│A second   │──▶│A second cell│─▶│          │─▶│  A second     │─▶│          │
         │de-interleaver│ │de-interleaver│ │          │  │ constellation │  │          │
         └──────────┘   └──────────┘   └──────────┘   │ de-mapper     │   └──────────┘
                                                       └──────────────┘
          612210-2        612220-2                       612220-2
```

# FIG. 5

Type 1 or type 2 PLP

Time

P2    P2   D   D   D

P1    0   $\cdots$   $N_{py-1}$   0   1   2   $\cdots$

OFDM symbols

$L_{data}$-1

Cell index

112100

112200

Complete signal frame

L1 pre signaling data    Type 1 PLP(1..M1)    Common PLP    Dummy cell

L1 post signaling data    Type 2 PLP(M1+1....M1+M2)    Auxiliary streams

EP 2 629 444 B1

# FIG. 6

(A)

113110-1  113110-2  113110-n-1  113110-n  113120-1  113120-2

| Basic frame | Basic frame | ..... | Basic frame | Basic frame | Additional frame (FEF) | ..... | Basic frame | Basic frame | Basic frame | Additional frame (FEF) |

FEF interval (N number of basic frames)

113100

(B)

113210-1  113210-2

| Basic frame | Additional frame (FEF) | Basic frame | Additional frame (FEF) | Basic frame | Additional frame (FEF) | ..... | Basic frame | Additional frame (FEF) | Basic frame | Additional frame (FEF) |

FEF interval (One basic frame)

113220

113200

EP 2 629 444 B1

# FIG. 7

EP 2 629 444 B1

**Row 1 (Tx1):**

| 302121 | 302131 | 302141 | 302151 | 302161 | 302171 | 302181 |
|---|---|---|---|---|---|---|
| pilot inserter | IFFT module | PAPR reduction module | GI insertion module | P1 insertion module | AP1 insertion module | DAC |

→ Tx1

**Row 2 (Tx2):**

| 302122 | 302132 | 302142 | 302152 | 302162 | 302172 | 302182 |
|---|---|---|---|---|---|---|
| pilot inserter | IFFT module | PAPR reduction module | GI insertion module | P1 insertion module | AP1 insertion module | DAC |

→ Tx2

# FIG. 8

EP 2 629 444 B1

Rx1 → ADC → P1 symbol detector → AP1 symbol detector → time/ frequency synchronizer → GI remover → FFT module → channel estimator →

306600   306601   306602   306603   306604   306605   306606

Rx2 → ADC → P1 symbol detector → AP1 symbol detector → time/ frequency synchronizer → GI remover → FFT module → channel estimator →

306610   306611   306612   306613   306614   306615   306616

# FIG. 9

(a)

| BODY | P1 | P2 | BODY |
|------|----|----|------|

1K Symbol

| C | A | B |
|---|---|---|

$f_{SH}$     $f_{SH}$

$T_{P1C}=59\mu s$   $T_{P1A}=112\mu s$   $T_{P1B}=53\mu s$

(b)

280110

CDS table module

280120

S1 → MSS module
S2 →

280130 DBPSK mapping module

280140 scrambling module

280150 padding module

280160 IFFT module

280170 C-A-B structure module

# FIG. 10

P1 and AP1 symbol transmission

(a)

| C | A | B | C' | A' | B' |

$+f_{SH}$     $+f_{SH}$     $-f_{SH}$     $-f_{SH}$

$T_C$   $T_B$     $T_{C'}$   $T_{B'}$

30     27

P1 symbol     AP1 symbol

(b)

12010 — CDS Table

12020 — Signalling to MSS

AP1-$\overline{S1}$ → 
AP1-$\overline{S1}$ →

12030 — DBPSK Mapping

12040 — Scrambling

12050 — Padding to 1K carriers

12060 — IFFT 1K

12070 — C'-A'-B' Structure ($-f_{SH}$) → P1

EP 2 629 444 B1

# FIG. 11

Received signal → **AP1 detect** (13010) → **A' part extract** (13020) → **1K FFT** (13030) → **Carrier extract** (13040) → **Descr-amble** (13060) → **DBPSK demap** (13070) → **S1/S2 decode** (13080) → S1 field / S2 field

**Carrier extract** (13040) ↕ **CDS table** (13050)

EP 2 629 444 B1

# FIG. 12

input

308102
delay
$T_{C'}$

308103
* ×

308104
running-
average
filter
$T_R$

308105
delay
$T_A$

* ×
down-
shifter
$e+j2\pi f_{SH}t$

308106
delay
$T_{C'}$

308107
* ×
complex
multipliers,
with one input
conjugated

308108
running-
average
filter
$T_R$

308109
×

output

# FIG. 13

| S1 | Preamble Format / P2 Type | Description |
|---|---|---|
| 000 | T2_SISO | The preamble is a T2-base preamble and the P2 part is transmitted in its SISO format |
| 001 | T2_MISO | The preamble is a T2-base preamble and the P2 part is transmitted in its MISO format |
| 010 | NON-T2 | See table 19(b) |
| 011 | T2_LITE_SISO | The preamble is a preamble of a T2-Lite signal, The P2 part is transmitted in its SISO format |
| 100 | T2_LITE_MISO | The preamble is a preamble of a T2-Lite signal, The P2 part is transmitted in its MISO format |
| 101 | NGH_SISO | The preamble is a preamble of a NGH basic profile signal, The P2 part is transmitted in its SISO (or eSFN) format |
| 110 | NGH_MIXO | The preamble is a preamble of a NGH basic profile signal, The P2 part is transmitted in its MISO format. The data part is either MISO or MIMO format, which is signaled by the P2 part. |
| 111 | Extended (ESC) | The current P1 part is further extended and followed by additional P1 (AP1) symbol with additional L1 signaling. |

# FIG. 14

S2 Field ( for NGH preamble types, )

| S2 field 1 | S2 field 2 | FFT/GI size (NGH basic profile) |
|---|---|---|
| 000 | X | FFT Size : 2K - any allowed guard interval |
| 001 | X | FFT Size : 8K - guard intervals 1/32; 1/16/ 1/8 or 1/4 |
| 010 | X | FFT Size : 4K - any allowed guard interval |
| 011 | X | FFT Size : 1K - any allowed guard interval |
| 100 | X | FFT Size : 16K - any allowed guard interval |
| 101 | X | FFT Size : 8K - guard intervals 1/128; 19/256 or 19/128 |
| 11x | X | Reserved |

(a)

S2 Field 1 ( for Extended type, S1 = 111 ) (S1 Field 1 for Non-T2, S1=010 is defined in T2 spec)

| S2 field 1 | Meaning |
|---|---|
| 000 | Preamble format of NGH MIMO signal |
| 001 | Preamble format of NGH hybrid SISO signal |
| 010 | Preamble format of NGH hybrid MISO signal |
| 011 | Preamble format of NGH hybrid MIMO signal |
| 100 ~ 111 | Reserved |

(b)

S2 Field 2

| S1 | S2 field 1 | S2 field 2 | Meaning | Description |
|---|---|---|---|---|
| XXX | XXX | 0 | Not mixed | All preambles in the current transmission are of the same type as this preamble |
| XXX | XXX | 1 | Mixed | Preambles of different types are transmitted |

(c)

# FIG. 15

(a)   P1 symbol

| S1 (3b) | S2 Field 1 (3b) | S2 Field 2 (1b) |
|---|---|---|

| Preamble Format/ P2 type | FFT size/GI | Mixed/non-mixed |
|---|---|---|
| Extended | Extended Type | |

(b)   AP1 symbol

| S3 (3b) | S4 Field 1 (3b) | S4 Field 2 (1b) |
|---|---|---|

| Wave form P2 type | FFT size/GI | Reserved |
|---|---|---|

# FIG. 16

| S3 (3b) | Waveform |
|---------|----------|
| 000 | OFDM |
| 001 | SC-OFDM |
| 010 ~ 111 | Reserved |

# FIG. 17

When S1=ESC, S2-1 = hybrid_MIXO, S3=OFDM

| S4-1 (3b) | Waveform & frame type |
|-----------|----------------------|
| 000 | FFT = 1K , GI = 1/32 |
| 001 | FFT = 1K , GI = 1/16 |
| 010 | FFT = 2K , GI = 1/32 |
| 011 | FFT = 2K , GI = 1/16 |
| 100 ~ 111 | Reserved |

(a)

When S1=ESC, S2-1 = hybrid_MIXO, S3=SC-OFDM

| S4-1 (3b) | Waveform |
|-----------|----------|
| 000 | FFT = 0.5K , GI = 1/32 |
| 001 | FFT = 0.5K , GI = 1/16 |
| 010 | FFT = 1K , GI = 1/32 |
| 011 | FFT = 1K , GI = 1/16 |
| 100 | FFT = 2K , GI = 1/32 |
| 101 | FFT = 2K , GI = 1/16 |
| 110 ~ 111 | Reserved |

(b)

# FIG. 18

```
        ┌─────────────┐
        │    Start     │
        └──────┬──────┘
               │
               ▼
┌───────────────────────────────────────────────────┐
│           BICM encoding PLP data                    │──── S180
└───────────────────────┬───────────────────────────┘
                        │
                        ▼
┌───────────────────────────────────────────────────┐
│ building first and second frames including the BICM │──── S181
│              encoded PLP data                       │
└───────────────────────┬───────────────────────────┘
                        │
                        ▼
┌───────────────────────────────────────────────────┐
│ modulating the first and second frames and inserting│
│ a  P1 symbol and an AP1 symbol into each of the     │──── S182
│ first and second frames to output first and second  │
│              broadcast signals                      │
└───────────────────────┬───────────────────────────┘
                        │
                        ▼
        ┌─────────────┐
        │    End       │
        └─────────────┘
```

# FIG. 19

```
                    ┌─────────────┐
                    │    Start    │
                    └─────────────┘
                           │
                           ▼
┌──────────────────────────────────────────────────────────────┐
│ receiving first and second broadcast signals including first   │──── S190
│ and second frames                                              │
└──────────────────────────────────────────────────────────────┘
                           │
                           ▼
┌──────────────────────────────────────────────────────────────┐
│ detecting the P1 symbol in the received first and second       │──── S191
│ broadcast signals                                              │
└──────────────────────────────────────────────────────────────┘
                           │
                           ▼
┌──────────────────────────────────────────────────────────────┐
│ detecting the AP1 symbol in the received first and second      │
│ broadcast signals for demodulating the received first and      │──── S192
│ second broadcast signals                                       │
└──────────────────────────────────────────────────────────────┘
                           │
                           ▼
┌──────────────────────────────────────────────────────────────┐
│ parsing the first and second frames from the demodulated       │──── S193
│ first and second broadcast signals                             │
└──────────────────────────────────────────────────────────────┘
                           │
                           ▼
┌──────────────────────────────────────────────────────────────┐
│ BICM decoding data in the first and second frames to output    │──── S194
│ PLP data                                                       │
└──────────────────────────────────────────────────────────────┘
                           │
                           ▼
                    ┌─────────────┐
                    │     End     │
                    └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009093809 A
- US 2009190677 A